# EUROPEAN PATENT APPLICATION

(11) **EP 4 380 242 A1**
(43) Date of publication of application: **05.06.2024**
(21) Application number: 22848662.7
(22) Date of filing: 29.07.2022
(51) Int. Cl.: H04W 52/02

(54) **COMMUNICATION METHOD AND DEVICE, AND STORAGE MEDIUM**

(30) Priority: 29.07.2021 CN 202110866891
(71) Applicant: ZTE Corporation, Shenzhen, Guangdong 518057 (CN)
(72) Inventor: NIU, Li, Shenzhen, Guangdong 518057 (CN); DAI, Bo, Shenzhen, Guangdong 518057 (CN); SHA, Xiubin, Shenzhen, Guangdong 518057 (CN); LU, Ting, Shenzhen, Guangdong 518057 (CN)
(74) Representative: Iannone, Carlo Luigi
(86) International application number: PCT/CN2022/108861
(87) International publication number: WO 2023/006058

(57) **Abstract**

Provided are a communication method and device and a storage medium. The method includes determining execution time information of a certain operation, where the certain operation is the operation of disabling a cell search; and executing the certain operation based on the execution time information.

## Description

### TECHNICAL FIELD

The present application relates to the field of communications, for example, a communication method and device and a storage medium.

### BACKGROUND

In a satellite coverage scenario, as satellites keep moving, one satellite may move out of the area where a user equipment (UE) is located while another satellite has not yet reached the area where the UE is located. As a result, no satellite in the area where the UE is located provides coverage for the UE for a period of time. That is, a coverage hole occurs. In this case, an idle UE that continues cell selection/reselection fails to find a camping cell even if the UE consumes unnecessary power, and a connected UE faces a radio link failure (RLF) and fails in connection re-establishment.

### SUMMARY

Embodiments of the present application provide a communication method and device and a storage medium, saving unnecessary power consumption of a first communication node.

An embodiment of the present application provides a communication method. The method is applied to a first communication node. The method includes determining execution time information of a certain operation, where the certain operation is the operation of disabling a cell search; and executing the certain operation based on the execution time information.

An embodiment of the present application provides a communication method. The method is applied to a second communication node. The method includes determining execution time information of a certain operation, where the certain operation is the operation of disabling a cell search; and sending the execution time information to a first communication node.

An embodiment of the present application provides a communication apparatus. The apparatus is applied to a first communication node. The apparatus includes a first determination module configured to determine execution time information of a certain operation, where the certain operation is the operation of disabling a cell search; and an executor configured to execute the certain operation based on the execution time information.

An embodiment of the present application provides a communication apparatus. The apparatus is applied to a second communication node. The apparatus includes a second determination module configured to determine execution time information of a certain operation, where the certain operation is the operation of disabling a cell search; and an indicator configured to send the execution time information to a first communication node.

An embodiment of the present application provides a communication device. The device includes a communication module, a memory, and at least one processor.

The communication module is configured to perform communication interaction between a first communication node, a second communication node, and a core network.

The memory is configured to store at least one program.

The at least one processor is configured to perform the method of any previous embodiment when executing the at least one program.

An embodiment of the present application provides a storage medium storing a computer program which, when executed by a processor, causes the processor to perform the method of any previous embodiment.

### BRIEF DESCRIPTION OF DRAWINGS

FIG. 1 is a diagram of a non-terrestrial network for access of a user equipment based on an embodiment.
FIG. 2 is a diagram of the scenario of a coverage hole based on an embodiment of the present application.
FIG. 3 is a flowchart of a communication method based on an embodiment of the present application.
FIG. 4 is a flowchart of another communication method based on an embodiment of the present application.
FIG. 5 is an update diagram of T3412 based on an embodiment of the present application.
FIG. 6 is another update diagram of T3412 based on an embodiment of the present application.
FIG. 7 is an update diagram of T3324 based on an embodiment of the present application.
FIG. 8 is an update diagram of the out-of-PTW duration based on an embodiment of the present application.
FIG. 9 is another update diagram of the out-of-PTW duration based on an embodiment of the present application.
FIG. 10 is an update diagram of the duration of a PTW based on an embodiment of the present application.
FIG. 11 is a parameter configuration diagram of an existing eDRX mechanism based on an embodiment.
FIG. 12 is a parameter configuration diagram of an eDRX mechanism based on an embodiment of the present application.
FIG. 13 is a parameter configuration diagram of another eDRX mechanism based on an embodiment of the present application.
FIG. 14 is a parameter configuration diagram of another eDRX mechanism based on an embodiment of the present application.
FIG. 15 is a parameter configuration diagram of another eDRX mechanism based on an embodiment of the present application.
FIG. 16 is a configuration diagram of a relaxed-measurement cycle or a spaced-detection cycle based on an embodiment of the present application.
FIG. 17 is a block diagram of a communication apparatus based on an embodiment of the present application.
FIG. 18 is a block diagram of another communication apparatus based on an embodiment of the present application.
FIG. 19 is a diagram illustrating the structure of a communication device based on an embodiment of the present application.

### DETAILED DESCRIPTION

Embodiments of the present application are described hereinafter in conjunction with the drawings. The present application is described hereinafter in conjunction with the embodiments and the drawings. The examples listed hereinafter are merely intended to explain the present application and not to limit the scope of the present application.

Ground networks are deployed in areas where users and services are centralized. Ground networks are deployed in areas such as cities, factories, and rural areas where users and services are centralized. Ground networks may even not be deployed in sparsely populated areas due to high costs and difficulty of deployment. However, with the advancement of science and technology, data collection and communication in remote areas, for example, collection of meteorological data from peaks or deserts, are required. Satellites can provide large coverage in remote areas, and thus deployment of non-terrestrial networks (NTNs) is emerging. Deployment of non-terrestrial networks can extend coverage of terrestrial networks and thereby can extend services of cellular network operators.

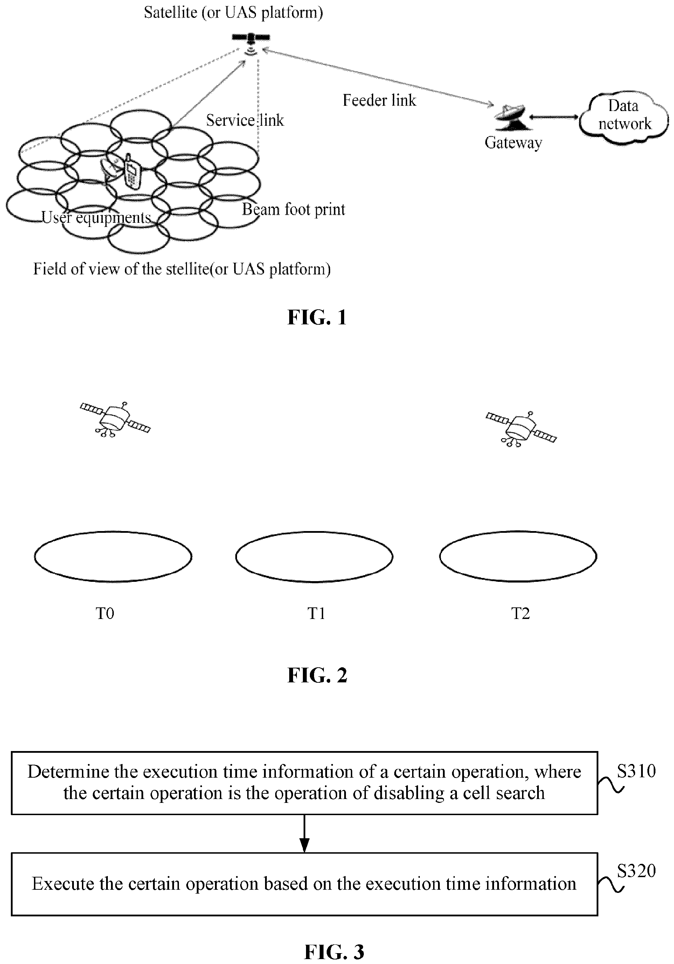

FIG. 1 is a diagram of a non-terrestrial network for access of a user equipment based on an embodiment.

An NTN gateway is a ground station or gateway on the surface of the Earth. An NTN gateway provides sufficient radio frequency power and radio frequency sensitivity (for example, a high altitude platform station (HAPS)) for access of a satellite. An NTN gateway is a node of a transmission network layer. A feeder link is a wireless link between the NTN gateway and a satellite. A service link is a radio link between a satellite and a UE. A satellite (or unmanned aircraft system (UAS) platform) typically generates multiple beams within a given service area within its field of view. The beam foot print of a beam is generally elliptical.

A satellite may be placed in a low earth orbit (LEO) or a geosynchronous earth orbit (GEO). A GEO is a circular orbit 35,786 km above the Earth equator along the direction of rotation of the Earth. The orbital period of a satellite on a GEO is equal to the rotation cycle of the earth, and thus the GEO satellite seen by an observer on the ground is stationary at a fixed position in the sky. The typical beam size of a GEO satellite is 200-3500 km. An LEO is an orbit around the earth. The height of an LEO is between 300 km and 1500 km. A satellite in an LEO runs around the earth at a speed of 7.56 km per second. The typical beam size of an LEO satellite is 100-1000 km.

To achieve the connectedness of the Internet of things, the deployment of a non-terrestrial network is required because the connectedness of the Internet of things requires a large coverage area. Narrowband Internet of Things (NB-IoT) or enhanced Machine Type of Communication (eMTC) based on a non-terrestrial network is a trend in the development of technology.

LEO satellites keep moving. One LEO satellite can provide coverage in only one area for only a certain time period. FIG. 2 is a diagram of the scenario of a coverage hole based on an embodiment of the present application. For example, an LEO satellite covers an area at time T0 and moves out of this area at time T1. If no other LEO satellite covers this area at time T1, a coverage hole occurs in this area at time T1. The coverage hole is present until another LEO satellite covers this area at time T2.

In the scenario shown in FIG. 2, when a UE is in a coverage hole, cell measurement or cell selection by the UE is futile and results in unnecessary UE power consumption. In view of this, an embodiment of the present application provides a communication method for executing the operation of disabling a cell search when the UE is in a coverage hole, saving UE power consumption.

FIG. 3 is a flowchart of a communication method based on an embodiment of the present application. This embodiment may be executed by a communication device. The communication device may be a first communication node. The first communication node may be a terminal device, for example, a UE. As shown in FIG. 3, this embodiment includes S310 and S320.

In S310, the execution time information of a certain operation is determined, where the certain operation is the operation of disabling a cell search.

The execution time information is information about the time the certain operation is executed. In an embodiment, the execution time information includes at least one of the start time and the end time of the certain operation, the start time and the duration of the certain operation, or the time interval of the certain operation, where the left end point and the right end point of the time interval of the certain operation are the start time and the end time of the certain operation respectively.

The duration of the certain operation may be regarded as a time interval. That is, the start time and the end time of the certain operation are the left end point and the right end point of the time interval respectively. In an embodiment, that the certain operation is the operation of disabling a cell search may be construed as that the certain operation is the operation of enabling the first communication node to save power consumption. In an embodiment, the duration of the certain operation may be construed as the sleep time of the first communication node.

In an embodiment, the certain operation includes one of deactivating an access stratum (AS); stopping a measurement operation; stopping a cell selection or reselection operation; stopping a public land mobile network (PLMN) selection operation; stopping a radio resource control (RRC) procedure initiation operation; or stopping listening to a paging message.

In S320, the certain operation is executed based on the execution time information.

In an embodiment, after the first communication node determines the execution time information of the certain operation, the first communication node executes the certain operation based on the execution time information to avoid increasing unnecessary power consumption of the first communication node.

In an embodiment, the duration of the certain operation is the duration of a coverage hole. In a satellite scenario, satellite coverage is discontinuous, that is, no satellite coverage occurs in a certain area in a certain duration, that is, a coverage hole occurs in a certain area in a certain duration. When in a coverage hole, the first communication node fails to find a camping cell and increases its power consumption even if it executes operations such as an AS activation operation; a measurement operation; a cell selection or reselection operation; a PLMN selection operation; an RRC procedure initiation operation; and paging message listening. In an embodiment, to save power consumption of the first communication node, when the first communication node is in a coverage hole, that is, when the current time reaches the start time of the certain operation, the first communication node executes the certain operation of deactivating an AS; stopping a measurement operation; stopping a cell selection or reselection operation; stopping a PLMN selection operation; stopping an RRC procedure initiation operation; or stopping listening to a paging message, thereby avoiding increasing power consumption of the first communication node; and when the current time reaches the end time of the certain operation, the first communication node terminates the certain operation, that is, the first communication node executes the following operations again: an AS activation operation; a measurement operation; a cell selection or reselection operation; a PLMN selection operation; an RRC procedure initiation operation; and paging message listening, thereby avoiding losing a paging message.

In an embodiment, determining the execution time information of the certain operation includes at least one of determining the execution time information of the certain operation based on the time information of a coverage hole associated with a history camping cell; determining the execution time information of the certain operation based on the time information of coverage holes associated with at least two cells able to receive the strongest signals; or determining the execution time information of the certain operation based on the time information of coverage holes associated with at least two cells that rank highest in terms of cell reselection priority and signal-receiving strength.

The history camping cell is a cell in which the first communication node had camped. In an embodiment, each time the first communication node camps in a cell, the first communication node acquires and stores time information of a coverage hole associated with the cell. Then the first communication node selects, based on the camping time sequence, N cells in which the first communication node has camped most recently; and determines the execution time information of the certain operation based on the time information of coverage holes associated with the N cells. In an embodiment, during cell reselection, the first communication node selects, based on the signal reception strength, N cells able to receive the strongest signals. That is, the first communication node is most likely to move to the N cells. The first communication node determines the execution time information of the certain operation based on the time information of coverage holes associated with the N cells able to receive the strongest signals. In an embodiment, during cell reselection, the first communication node selects N cells that rank highest in terms of cell reselection priority and signal-receiving strength. That is, the N cells are cells in which the first communication node is most likely to camp. The first communication node determines the execution time information of the certain operation based on the time information of coverage holes associated with the N cells that rank highest in terms of cell reselection priority and signal-receiving strength.

In an embodiment, when an overlap exists among the time information of coverage holes associated with the at least two cells, the execution time information of the certain operation is determined based on the minimum value of the start time of the time information of coverage holes associated with all cells and the maximum value of the end time of the time information of coverage holes associated with all cells; or when no overlap exists among the time information of coverage holes associated with the at least two cells, a union of the time information of coverage holes associated with all cells is determined as the execution time information of the certain operation.

In an embodiment, when an overlap exists among the time information of coverage holes associated with the N cells, a union of the time information of coverage holes associated with the N cells is determined as the execution time information of the certain operation. That is, the minimum value of the start time of the coverage holes associated with the N cells is determined as the start time of the certain operation, and the maximum value of the end time of the coverage holes associated with the N cells is determined as the end time of the certain operation. In an embodiment, when no overlap exists among the time information of coverage holes associated with the N cells, the execution time information of the certain operation is composed of multiple time periods. Each time period is determined by the start time and the end time of one coverage hole. Illustratively, assuming that no overlap exists between the duration of coverage hole 1 corresponding to cell 1 and the duration of coverage hole 2 corresponding to cell 2, then the duration of the certain operation includes two time periods. One time period corresponds to the duration of coverage hole 1, and the other time period corresponds to the duration of coverage hole 2.

In an embodiment, the communication method applied to the first communication node also includes that the RRC layer of the first communication node reports the execution time information of the certain operation to the non-access stratum (NAS) of the first communication node, a second communication node, or a core network.

In this embodiment, when the second communication node broadcasts or is configured with an enable indication bit for indicating that the RRC of the first communication node can report information to the NAS, the RRC of the first communication node reports the execution time information of the certain operation to the NAS. The first communication node may also report the execution time information of the certain operation to the second communication node or the core network.

In an embodiment, the communication method applied to the first communication node also includes reporting a certain-operation start indication, a data transmission pause indication, or an access forbidden indication to the NAS of the first communication node when the RRC layer of the first communication node detects that the first communication node is about to enter or has entered a coverage hole; or reporting a certain-operation end indication, a data transmission resume indication, or an access admitted indication to the NAS of the first communication node when the RRC layer of the first communication node detects that the first communication node is about to leave or has left a coverage hole.

In an embodiment, when the RRC layer detects that the first communication node is about to enter or has entered a coverage hole, that is, when the current time is greater than or equal to the start time of the certain operation, the RRC layer reports a certain-operation start indication to the NAS to indicate that the first communication node is about to enter or has entered the coverage hole; or the RRC layer reports a data transmission pause indication or an access forbidden indication to the NAS to indicate that traffic cannot be transmitted in the network. In an embodiment, when the RRC layer detects that the first communication node is about to leave or has left a coverage hole, that is, when the current time is greater than or equal to the end time of the certain operation, the RRC layer reports a certain-operation end indication to the NAS to indicate that the first communication node is about to leave or has left the coverage hole; or the RRC layer reports a data transmission resume indication or an access admitted indication to the NAS to indicate that traffic can be transmitted in the network.

In an embodiment, determining the execution time information of the certain operation includes determining the execution time information of the certain operation based on the power saving time information of the Power Saving Mode (PSM) mechanism or the power saving time information of the Extended Discontinuous Reception (eDRX) mechanism and the time information of a coverage hole.

In an embodiment, the first communication node may determine the execution time information of the certain operation based on the power saving time information of the PSM mechanism or the power saving time information of the eDRX mechanism and the start time and the end time of a coverage hole.

In an embodiment, when the first communication node is configured with the PSM mechanism, determining the execution time information of the certain operation based on the power saving time information of the PSM mechanism and the time information of the coverage hole includes one of: when an overlap exists between the duration of the coverage hole and the duration in which the PSM mechanism is in a sleep state, determining a union of the duration of the coverage hole and the duration in which the PSM mechanism is in the sleep state to be the duration of the certain operation; or when an overlap exists between the duration of the coverage hole and the duration of an idle state, determining a union of the duration of the coverage hole and the duration in which the PSM mechanism is in a sleep state to be the duration of the certain operation, where the duration of the certain operation includes at least two discontinuous time periods.

The duration in which the PSM mechanism is in a sleep state may be construed as the duration of T3412. The duration of an idle state may be construed as the duration of T3324. The duration of T3412 may also be referred to as the runtime of T3412. The duration of T3324 may also be referred to as the runtime of T3324. In an embodiment, when an overlap exists between the duration of a coverage hole and the duration of T3412, the duration of the certain operation is a union of the duration of T3412 and the duration of the coverage hole. That is, the start time of the certain operation is the minimum value of the start time of T3412 and the start time of the coverage hole, and the end time of the certain operation is the maximum value of the end time of T3412 and the end time of the coverage hole. In an embodiment, when no overlap exists between the duration of a coverage hole and the duration of T3412 and when an overlap exists between the duration of the coverage hole and the duration of an idle state, the duration of the certain operation is a union of the duration of T3412 and the duration of the coverage hole, and the duration of the certain operation includes multiple discontinuous time periods. Among the discontinuous time periods, one time period is the runtime of T3412, and other time periods belong to the duration of the coverage hole.

In an embodiment, when the first communication node is configured with the eDRX mechanism, determining the execution time information of the certain operation based on the power saving time information of the eDRX mechanism and the time information of the coverage hole includes one of: when an overlap exists between the duration of the coverage hole and the out-of-PTW duration, determining a union of the duration of the coverage hole and the out-of-PTW duration to be the duration of the certain operation; or when an overlap exists between the duration of the coverage hole and the duration of the PTW, determining a union of the duration of the coverage hole and the out-of-PTW duration to be the duration of the certain operation, where the duration of the certain operation includes at least two discontinuous time periods.

The out-of-PTW duration is the out-of-PTW runtime. The duration of the PTW is the runtime of the PTW. In an embodiment, when an overlap exists between the duration of a coverage hole and the out-of-PTW duration, the duration of the certain operation is a union of the out-of-PTW runtime and the duration of the coverage hole. That is, the start time of the certain operation is the minimum value of the out-of-PTW start time and the start time of the coverage hole, and the end time of the certain operation is the maximum value of the out-of-PTW end time and the end time of the coverage hole. In an embodiment, when no overlap exists between the duration of a coverage hole and the out-of-PTW duration and when an overlap exists between the duration of the coverage hole and the duration of the PTW, the duration of the certain operation is a union of the out-of-PTW runtime and the duration of the coverage hole, and the duration of the certain operation includes multiple discontinuous time periods. Among the discontinuous time periods, one time period is the out-of-PTW runtime, and other time periods belong to the duration of the coverage hole. Discontinuous time periods are time periods that are not continuous.

In an embodiment, the communication method applied to the first communication node also includes receiving an RRC message or system information carrying the execution time information indicated by a second communication node; or receiving a NAS message carrying the execution time information indicated by a core network.

The second communication node is a base station. In an embodiment, it is feasible that a base station indicates a list of the execution time information of the certain operation to the first communication node through an RRC message or system information; or a core network indicates a list of the execution time information of the certain operation to the first communication node through a NAS message. The execution time information of the certain operation includes at least one of the start time and the end time of the certain operation, the start time and the duration of the certain operation, or the time interval of the certain operation, where the left end point and the right end point of the time interval of the certain operation are the start time and the end time of the certain operation respectively.

In an embodiment, the communication method applied to the first communication node also includes reporting the execution time information of the certain operation to a second communication node or a core network; or reporting the execution time information of the certain operation acquired by the first communication node to a second communication node or a core network.

In an embodiment, when the second communication node or the core network indicates that the first communication node can report the execution time information of the certain operation, the first communication node may report the execution time information of the certain operation to the second communication node or the core network. In an embodiment, the second communication node may indicate, through an RRC message or system information, that the first communication node can report the execution time information of the certain operation; and the core network may indicate, through a NAS message, that the first communication node can report the execution time information of the certain operation. In an embodiment, the first communication node searches a cell after the end of a coverage hole based on the execution time information of the certain operation configured by the core network or the second communication node; and if the first communication node finds that the first communication node is still in the coverage hole, that is, if the end time of the certain operation is less than the end time of the coverage hole, the first communication node may detect the time information of the coverage hole and report the time information of the coverage hole detected by the first communication node to the second communication node or the core network so that the second communication node or the core network updates the execution time information of the certain operation.

In an embodiment, the communication method applied to the first communication node also includes determining a discontinuous-listening cycle parameter. The discontinuous-listening cycle parameter includes at least one of the discontinuous-listening start time, the discontinuous-listening start time offset value, the discontinuous-listening duration, the discontinuous-listening cycle length, or the PTW parameter. Each PTW parameter includes at least one of the PTW start time and the PTW duration; or the PTW start time and the PTW end time.

In an actual communication process, a coverage hole occurs at a random time, that is, a coverage hole occurs irregularly, that is, the duration of a coverage hole may overlap the runtime of a PTW. If the duration of a coverage hole coincides with the runtime of a PTW, the first communication node is in a power-saving state during the runtime of the PTW, causing the first communication node to miss an opportunity to listen to a paging message and choose to wait for the runtime of the next PTW. Therefore, to prevent the first communication node from missing the paging message, it is feasible to configure the runtime of the PTW flexibly, that is, determine the discontinuous-listening cycle parameter again to prevent the runtime of the PTW from overlapping the duration of the coverage hole.

In an embodiment, determining the discontinuous-listening cycle parameter includes at least one of negotiating with a core network about the discontinuous-listening cycle parameter, where a cycle corresponding to the discontinuous-listening cycle parameter contains at least two PTWs; negotiating with a core network about at least two discontinuous-listening cycle parameters and listening cyclically based on a cycle corresponding to each discontinuous-listening cycle parameter, where each discontinuous-listening cycle contains one PTW; negotiating with a core network about at least two discontinuous-listening cycle parameters and listening cyclically based on a cycle corresponding to each discontinuous-listening cycle parameter, where each discontinuous-listening cycle contains one PTW, and each discontinuous listening corresponds to one time period; or negotiating with a core network about at least two discontinuous-listening cycle parameters and listening cyclically based on a cycle corresponding to each discontinuous-listening cycle parameter, where each discontinuous-listening cycle contains one PTW, and each discontinuous-listening cycle parameter is associated with one area.

In an embodiment, the first communication node negotiates with the core network about the discontinuous-listening cycle parameter, and each discontinuous-listening cycle contains multiple PTWs. The discontinuous-listening cycle parameter includes the discontinuous-listening cycle length and a PTW parameter list. The PTW parameter list includes multiple PTW parameters, that is, parameters of all PTWs included in each discontinuous-listening cycle. Each PTW parameter includes at least one of the PTW start time and the PTW duration; or the PTW start time and the PTW end time.

In an embodiment, the first communication node negotiates with the core network about a discontinuous-listening cycle parameter list. The discontinuous-listening cycle parameter list contains multiple discontinuous-listening cycle parameters. The first communication node cyclically listens based on each discontinuous-listening cycle parameter. Each discontinuous-listening cycle parameter includes the length of a discontinuous-listening cycle and a PTW parameter. Each discontinuous-listening cycle includes one PTW. Each PTW parameter includes the PTW start time and the PTW duration or includes the PTW start time and the PTW end time.

In an embodiment, the first communication node negotiates with the core network about a discontinuous-listening cycle parameter list. The discontinuous-listening cycle parameter list contains multiple discontinuous-listening cycle parameters. The first communication node cyclically listens based on each discontinuous-listening cycle parameter. Each discontinuous-listening cycle parameter includes the discontinuous-listening start time, the length of a discontinuous-listening cycle, and a PTW parameter; or each discontinuous-listening cycle parameter includes the discontinuous-listening start time offset value, the length of a discontinuous-listening cycle, and a PTW parameter; or each discontinuous-listening cycle parameter includes the discontinuous-listening duration, the length of a discontinuous-listening cycle, and a PTW parameter. Each discontinuous-listening cycle includes one PTW. Each discontinuous-listening cycle corresponds to one time period.

In an embodiment, the first communication node negotiates with the core network about a discontinuous-listening cycle parameter list. The discontinuous-listening cycle parameter list contains multiple discontinuous-listening cycle parameters. The first communication node cyclically listens based on each discontinuous-listening cycle parameter. Each discontinuous-listening cycle parameter includes the length of a discontinuous-listening cycle and a PTW parameter. Each discontinuous-listening cycle contains one PTW. Each discontinuous-listening cycle parameter is associated with one area. The area is a cell, a satellite, or a base station. That is, each discontinuous-listening cycle parameter corresponds to one cell, one satellite, or one base station.

In an embodiment, the communication method applied to the first communication node also includes configuring a relaxed-measurement cycle or a spaced-detection cycle and configuring a detection time period in each relaxed-measurement cycle or each spaced-detection cycle, where the detection time period is a time period in which the first communication node performs the cell search.

In an actual communication process, the first communication node in an idle state detects a coverage hole. For example, during a time period, the first communication node cannot detect any suitable cell for camping, cannot detect any cell selection state, or cannot find any cell on all supported frequency bands, and does not acquire the end time of the coverage hole. In this case, the first communication node may enable the relaxed measurement mechanism or the spaced detection mechanism. In the detection time period in the relaxed measurement cycle or the detection time period in the spaced detection cycle, one of the following is executed: a continuous cell search or a cyclic/discontinuous cell search. In the time interval between the two detection time periods, the first communication node executes the certain operation, that is, the first communication node does not execute measurement, cell selection or reselection, or listening to a paging message, thereby avoiding long-time power consumption of the first communication node.

In an embodiment, the communication method applied to the first communication node also includes switching the current state of the first communication node based on the execution time information of the certain operation.

In an embodiment, if the duration of a coverage hole is very short and if the first communication node switches the current state at the start time of the coverage hole and witches the current state again at the end time of the coverage hole, power consumption of the first communication node increases due to such repetition. Therefore, it is necessary for the first communication node to switch its current state based on the length of the execution time information of the certain operation.

In an embodiment, when the first communication node is in an inactive state, switching the current state of the first communication node based on the execution time information of the certain operation includes at least one of: when the current time is greater than or equal to the difference between the start time of the certain operation and a first preset threshold, switching the inactive state of the first communication node to the idle state of the first communication node; when the first communication node is in a cell selection state or when the duration of the cell search reaches a preset duration, switching the inactive state of the first communication node to the idle state of the first communication node; when the duration in which the first communication node executes the certain operation reaches a second preset threshold, switching the inactive state of the first communication node to the idle state of the first communication node; or instructing the first communication node to switch from an inactive state to an idle state based on configuration information of a second communication node in system information or an RRC message.

In an embodiment, the first communication node switches from an inactive state to an idle state when the first communication node is in an inactive state and when the current time is equal to or close to the time at which the serving cell is about to end services or when the first communication node determines that the serving cell is about to stop or has stopped services, that is, when the current time is greater than or equal to the difference between the start time of the certain operation and the first preset threshold. The first preset threshold may be positive, negative, or zero, may be broadcast by the second communication node, or may be configured by the RRC.

In an embodiment, the first communication node switches from an inactive state to an idle state when the first communication node is in an inactive state and when the first communication node is in a cell selection state or the duration of the cell search or the duration in which no camping cell can be found reaches a preset duration. The preset duration may be configured by the second communication node, may be determined by the first communication node, may be a fixed value, or may be 0.

In an embodiment, when the first communication node is in an inactive state, the first communication node switches from an inactive state to an idle state when the duration of the certain operation is greater than the second preset threshold; and the first communication node is still in an inactive state within the duration of the certain operation when the duration of the certain operation is less than the second preset threshold. The second preset threshold may be broadcast by the second communication node through system information or may be configured in an RRC message.

In an embodiment, when the first communication node is in an inactive state and when information for instructing the first communication node to enter or not to enter an idle state within the duration of the certain operation is configured in system information or an RRC message configured by the second communication node and sent to the first communication node, the first communication node enters an idle state at the start time of the certain operation if the second communication node instructs the first communication node to enter an idle state within the duration of the certain operation and remains in an inactive state within the duration of the certain operation if the second communication node instructs the first communication node not to enter an idle state within the duration of the certain operation.

In practice, the four conditions for determining whether to switch the current state may be combined in any manner to determine whether to switch the first communication node from an inactive state to an idle state.

In an embodiment, when the first communication node is in an inactive state, the communication method applied to the first communication node also includes at least one of the following: At the start time of the certain operation, the RRC layer of the first communication node executes the operation of deactivating an AS; at the start time of the certain operation, the NAS of the first communication node instructs the RRC layer of the first communication node to execute the operation of deactivating an AS; or at the start time of the certain operation, the RRC layer of the first communication node executes the reply operation of a NAS failure.

In an embodiment, when the first communication node is in an inactive state, the RRC layer of the first communication node executes the operation of deactivating an AS at the start time of the certain operation (or a coverage hole) until the current time reaches the end time of the certain operation (or the coverage hole). When the current time reaches the end time of the certain operation (or the coverage hole), the RRC layer of the first communication node executes the operation of activating the AS, and the first communication node remains in an inactive state. In an embodiment, when the first communication node is in an inactive state, the NAS of the first communication node instructs the RRC layer of the first communication node to execute the operation of deactivating an AS at the start time of the certain operation (or a coverage hole) and execute the operation of activating the AS at the end time of the certain operation (or the coverage hole). In an embodiment, the RRC layer executes the reply operation of a NAS failure when the first communication node in an inactive state is within the execution time of the certain operation and when the NAS initiates an RRC resume procedure.

In an embodiment, when the first communication node is in a connected state, switching the current state of the first communication node based on the execution time information of the certain operation includes at least one of the following: When the current time is greater than or equal to the start time of the certain operation, the RRC layer of the first communication node executes the operation of exiting the connected state, and the first communication node returns to an idle state; when the current time is greater than or equal to the start time of the certain operation, the RRC layer of the first communication node initiates an RRC release procedure, the RRC layer of the first communication node executes the operation of exiting the connected state, and the first communication node returns to an idle state; or when the current time is greater than or equal to the start time of the certain operation, the RRC layer of the first communication node executes the operation of exiting the connected state, the first communication node returns to an idle state, and the RRC layer of the first communication node executes the certain operation.

In an embodiment, when the first communication node in a connected state determines that a coverage hole is about to occur, that is, when the current time is greater than or equal to the start time of the certain operation, the RRC layer executes the operation of exiting the connected state, and the first communication node returns to an idle state. In an embodiment, when the first communication node in a connected state determines that a coverage hole is about to occur, that is, when the current time is greater than or equal to the start time of the certain operation, the RRC layer initiates an RRC release procedure and executes the operation of exiting the connected state, and the first communication node returns to an idle state. In an embodiment, when the first communication node in a connected state determines that a coverage hole is about to occur, that is, when the current time is greater than or equal to the start time of the certain operation, the RRC layer executes the operation of exiting the connected state, the first communication node returns to an idle state, and the RRC layer executes the certain operation. In one embodiment, in the case where the first communication node at the connected state determines that the coverage hole is about to occur, that is, the current time is equal to or greater than the start time of the certain operation, the RRC layer performs the operation leaving the connected state and returns to the idle state, and the RRC layer performs the certain operation.

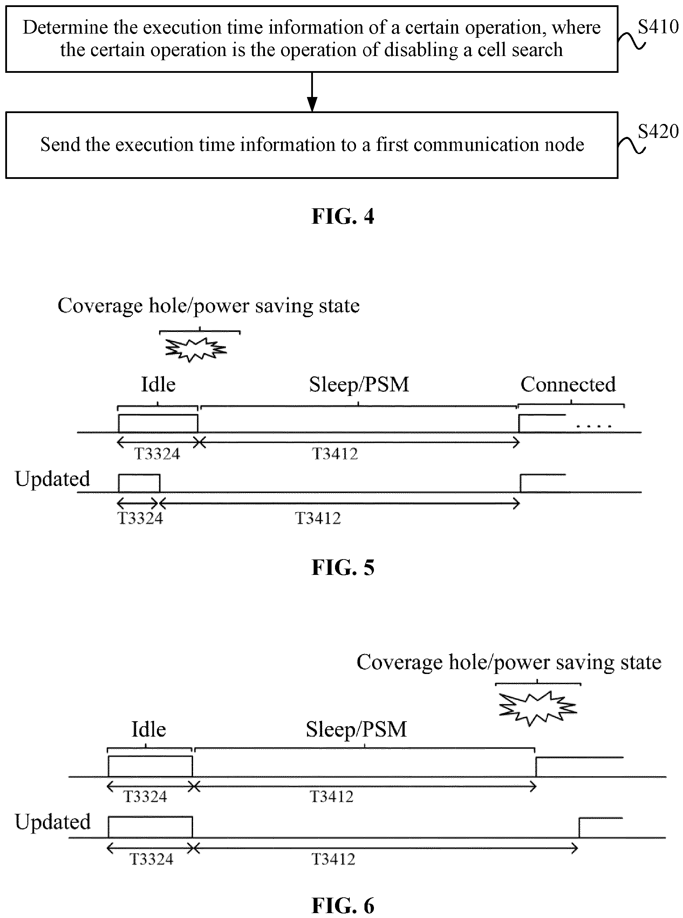

FIG. 4 is a flowchart of another communication method based on an embodiment of the present application. This embodiment may be implemented by a communication device. The communication device may be a second communication node. The second communication node may be a base station. As shown in FIG. 4, this embodiment includes S410 and S420.

In S410, the execution time information of a certain operation is determined, where the certain operation is the operation of disabling a cell search.

In S420, the execution time information is sent to a first communication node.

In an embodiment, the execution time information of the certain operation may be configured by the second communication node, and the second communication node may indicate the execution time information of one or more certain operations, that is, the duration of a coverage hole, to the first communication node. The execution time information of the certain operation includes at least one of the start time and the end time of the certain operation or the start time and the duration of the certain operation. The certain operation may be associated with an area (for example, the coverage of a serving cell or the coverage of a serving satellite) where the first communication node is located. In an embodiment, the certain operation may be applicable to a stationary first communication node, and the execution time information may be absolute time information.

In an embodiment, sending the execution time information to the first communication node includes sending the execution time information to the first communication node through system information or an RRC message.

In an embodiment, the second communication node may indicate the execution time information to the first communication node through a system information broadcast or an RRC message.

In an embodiment, the communication method applied to the second communication node also includes reporting the execution time information to a core network through a message of an NG interface or a message of an S1 interface.

In an embodiment, the second communication node may indicate the execution time information of the certain operation through the message of the NG interface or the message of the S 1 interface. In an embodiment, the coverage hole or the certain operation may also be associated with the area covered by a cell.

It is to be noted that for details about the explanation of parameters such as the certain operation and the execution time information involved in the communication method applied to the second communication node, see the explanation in the previous communication method applied to the communication node. The details are not described again here.

In an embodiment, the determination process of the execution time information of the certain operation is described by using a UE as the first communication node and a base station as the second communication node as an example. In a satellite scenario, satellite coverage is discontinuous, that is, no satellite coverage occurs in a certain area in a certain duration, that is, a coverage hole occurs in a certain area in a certain duration. When in a coverage hole, the UE fails to find a camping cell and increases its power consumption if it executes operations such as a measurement operation; a cell selection or reselection operation; and paging message listening.

To save power consumption, when the UE is in a coverage hole, the UE may execute the certain operation. The certain operation includes deactivating an AS; stopping a measurement operation; stopping a cell selection or reselection operation; stopping a PLMN selection operation; stopping an RRC procedure initiation operation; or stopping listening to a paging message.

After the end of the coverage hole, the UE ends the certain operation in time, that is, the UE executes the following operations again: a measurement operation; a cell selection; and paging message listening, thereby avoiding losing a paging message. The duration of the coverage hole is the duration in which the UE executes the certain operation.

In an embodiment, the UE may acquire, through ephemeris information or an indication from the base station or the core network, the time information of the coverage hole associated with the serving satellite or the serving cell, that is, the time information of the coverage hole in the area where the UE is located. In an embodiment, the UE may acquire, through ephemeris information or an indication from the base station or the core network, the time information of the coverage hole associated with an adjacent satellite or a neighbor cell, that is, the time information of a coverage hole adjacent to the area where the UE is located. The time information may include the start time and the end time or include the start time and the duration.

However, coverage holes in different areas differ in start time, end time, and duration. Illustratively, the UE acquires, from an indication from the current cell 1, the time information of a coverage hole associated with the current cell 1. If the UE starts and ends the certain operation still based on the time information of the coverage hole associated with cell 1 after the UE moves to another cell, then the UE detects no satellite coverage, that is, prematurely ends the certain operation, if a coverage hole associated with the another cell has not ended when the UE ends the certain operation.

To avoid the preceding situation, the UE may determine the execution time information of the certain operation in combination with the time information of coverage holes associated with multiple cells or satellites.

Method one: The UE determines the execution time information of the certain operation based on the time information of a coverage hole associated with a history camping cell. In an embodiment, each time the UE camps in a cell, the UE can acquire the time information of a coverage hole associated with the cell. Then the UE stores the time information of the coverage hole associated with the cell. The UE selects, based on the camping time sequence, N cells in which the first communication node has camped most recently. That is, the N cells are areas where the UE is most likely to appear. The UE acquires the time information of coverage holes associated with the N cells.

Method two: The UE determines the execution time information of the certain operation based on the time information of coverage holes associated with at least two cells able to receive the strongest signals. During cell reselection, the UE selects, based on the signal reception strength, N cells able to receive the strongest signals. The UE is most likely to move to the N cells. If the base station broadcasts or the network indicates ephemeris information associated with the N cells or the time information of coverage holes associated with the N cells, the UE can acquire the time information of coverage holes associated with the N cells.

Method three: The UE determines the execution time information of the certain operation based on the time information of coverage holes associated with at least two cells that rank highest in terms of cell reselection priority and signal-receiving strength. During cell reselection, the UE may select N cells that rank highest in terms of cell reselection priority and signal-receiving strength. The UE is most likely to move to the N cells. If the base station broadcasts or the network indicates ephemeris information associated with the N cells or the time information of coverage holes associated with the N cells, the UE can acquire the time information of coverage holes associated with the N cells.

In an embodiment, the UE determines the execution time information of the certain operation based on the time information of coverage holes associated with the N cells.

In an embodiment, when an overlap exists among the time information of coverage holes associated with the at least two cells, the execution time information of the certain operation is determined based on the minimum value of the start time of the time information of the overlapping coverage holes and the maximum value of the end time of the time information of the overlapping coverage holes. It is assumed that an overlap exists among the time information of coverage holes associated with N cells. For example, the duration of coverage hole 1 overlaps or coincides with the duration of coverage hole 2. In this case, the UE determines a union of the duration of coverage hole 1 and the duration of coverage hole 2 to be the duration in the time execution information of the certain operation. The UE selects the minimum value of the start time of coverage holes associated with the N cells, that is, the earliest occurrence time of coverage hole 1 and coverage hole 2, to serve as the start time of the certain operation. The UE selects the maximum value of the end time of coverage holes associated with the N cells, that is, the latest end time of coverage hole 1 and coverage hole 2, to serve as the end time of the certain operation.

In an embodiment, when no overlap exists among the time information of coverage holes associated with the at least two cells, a union of the time information of coverage holes associated with all cells is determined as the execution time information of the certain operation. It is assumed that no overlap exists among the time information of coverage holes associated with N cells. For example, the duration of coverage hole 1 does not overlap the duration of coverage hole 2. In this case, the UE determines a set composed of the duration of coverage hole 1 and the duration of coverage hole 2 to be the duration in the time execution information of the certain operation. In this case, the duration in the time execution information of the certain operation is composed of multiple time periods. The time information of each time period is determined by the time information of one coverage hole. For example, if the duration in the execution time information of the certain operation is composed of time period 1 and time period 2, then the start time and the end time of coverage hole 1 determines the start time and the end time of time period 1, and the start time and the end time of coverage hole 2 determines the start time and the end time of time period 2.

In this embodiment, the value of N may be determined by the UE, may be broadcast or configured by the base station, or may be determined by time. For example, the value of N may be the number of cells in which the UE has camped in the past.

In an embodiment, the process of reporting the execution time information of the certain operation to the NAS by the RRC layer of the UE is described by using a UE as the first communication node and a base station as the second communication node as an example. If the RRC layer of the UE acquires the execution time information (for details of which, see the previous embodiment) of the certain operation, the RRC layer may report the acquired information to the NAS, the base station, or the core network. The NAS may negotiate with the core network about parameters of the PSM mechanism or the eDRX mechanism based on the reported execution time information or activate/deactivate the AS based on the reported execution time information. The base station or the core network may determine the UE paging time by using the reported execution time information.

Method one: The RRC layer reports the execution time information of the certain operation to the NAS based on the execution time information of the certain operation. The base station may broadcast or configure an indication bit for indicating enabling the RRC layer to report information to the NAS so that the RRC layer of the UE can report information to the NAS, where the information may be the execution time information of the certain operation. The UE in an RRC idle or inactive state camps in a cell, reads the system information of the serving cell, and acquires the execution time information of the certain operation based on the solution of the previous embodiment. The RRC layer reports the execution time information to the NAS. The UE in an RRC connected state receives the configuration information of the base station. The configuration information includes the execution time information of the certain operation. The RRC layer reports the execution time information to the NAS. The execution time information may be absolute time information.

Method two: The RRC layer reports a certain-operation start indication, a data transmission pause indication, or an access forbidden indication to the NAS when detecting that the UE is about to enter or has entered a coverage hole. When the RRC layer detects that the UE is about to enter or has entered a coverage hole, that is, when the current time is greater than or equal to the start time of the coverage hole or the certain operation, the RRC layer reports a coverage hole start indication to the NAS to indicate that the UE is about to enter or has entered the coverage hole; or the RRC layer reports a data transmission pause indication or an access forbidden indication to the NAS to indicate that traffic cannot be transmitted in the network.

When the RRC layer detects that the UE is about to leave or has left a coverage hole, the RRC layer reports a certain-operation end indication, a data transmission resume indication, or an access admitted indication to the NAS. When the RRC layer detects that the UE is about to leave or has left a coverage hole, that is, when the current time is greater than or equal to the end time of the coverage hole or the certain operation, the RRC layer reports a certain-operation end indication to the NAS to indicate that the UE is about to leave or has left the coverage hole; or the RRC layer reports a data transmission resume indication or an access admitted indication to the NAS to indicate that traffic can be transmitted in the network.

The RRC layer may also report the duration of a coverage hole, a data transmission pause, or the certain operation to the NAS. The NAS may determine, based on the duration of the coverage hole, the data transmission pause, or the certain operation, the start time at which the UE starts or ends a power saving mode.

In an embodiment, in a satellite scenario, satellite coverage is discontinuous, that is, no satellite coverage occurs in a certain area in a certain duration, that is, a coverage hole occurs in a certain area in a certain duration. To save power consumption, when the UE is in a coverage hole, the UE may execute the certain operation, that is, not execute an operation such as measurement or cell selection in the duration of the coverage hole. When configured with the eDRX mechanism or the PSM mechanism by the network, the UE may enter a power saving state, that is, not execute an operation such as measurement or cell selection. When the UE enters a coverage hole, the UE may enter the inactive state of the PSM mechanism or the eDRX mechanism.

However, the time information of a coverage hole is irregular. The duration of the sleep state of the PSM mechanism configured by the network (for example, the duration in which the AS is inactive or the runtime of T3412) or the duration of the inactive state of the eDRX mechanism configured by the network (for example, the out-of-PTW duration) cannot cover all of the duration of a coverage hole. That is, the UE may exit the sleep state of the PSM mechanism or the inactive state of the eDRX mechanism before the end of the coverage hole, failing to achieve the desired power saving effect. To make the duration of the sleep state of the PSM mechanism (for example, the runtime of T3412) or the duration of the inactive state of the eDRX mechanism cover all of the duration of a coverage hole, the network reconfigures parameters of the PSM mechanism and the eDRX mechanism based on the duration of the coverage hole. The reconfigured parameters include the duration of T3324 and T3412 of the PSM mechanism, the cycle of the eDRX mechanism, and the start time and length of the PTW. Moreover, the UE is moving. If the network cannot accurately acquire which coverage hole the UE may appear in, the duration of the sleep state of the PSM mechanism configured by the network or the duration of the inactive state of the eDRX mechanism configured by the network still cannot cover all of the duration of the coverage hole.

To avoid these problems, the UE may determine the final execution time information of the certain operation of the UE in combination with the power saving time information of the PSM mechanism or the eDRX mechanism and the start time and the end time of a coverage hole.

Method one: The UE determines the final execution time information of the certain operation of the UE when the UE acquires the start time and the end time of the coverage hole or the certain operation and when the UE is configured with the PSM mechanism.

When the duration of the coverage hole or the certain operation overlaps the duration (or runtime) of T3412, the final sleep time of the UE (that is, the duration of the certain operation) is a union of the configured runtime of T3412 and the duration of the coverage hole or the certain operation.

The UE updates the runtime of T3412, that is, the sleep state of the UE, based on the final sleep time. That is, the start time of the updated T3412 is the minimum value of the start time of the coverage hole or the certain operation and the start time of the non-updated T3412, and the end time of the updated T3412 is the maximum value of the end time of the coverage hole or the certain operation and the end time of the non-updated T3412.

Alternatively, when the duration of the coverage hole or the certain operation overlaps the duration (or runtime) of T3412, the final non-sleep time of the UE (that is, the non-execution duration of the certain operation) is a difference set between the configured runtime of T3324 and the duration of the coverage hole or the certain operation. The UE updates the end time of T3324, that is, the non-sleep state of the UE, based on the final sleep time. That is, the end time of the updated T3324 is the minimum value of the start time of the coverage hole or the certain operation and the configured end time of the non-updated T3324.

Illustratively, the start time and the duration of T3324 remain the same if the runtime of T3324 covers all of the duration of the coverage hole or the certain operation during the runtime of T3324.

FIG. 5 is an update diagram of T3412 according to an embodiment of the present application. As shown in FIG. 5, the UE determines that the duration of the coverage hole or the certain operation overlaps the runtime of T3324 during the runtime of T3324, so at the start time of the coverage hole, the UE ends T3324 and starts T3412, ensuring that the UE enters a sleep state when the coverage hole occurs. The runtime of T3412 is updated to a duration that covers the duration of the coverage hole or the certain operation. That is, the runtime of T3412 is updated to the sum of the original runtime of T3412 and an overlap between T3324 and the duration of the coverage hole or the certain operation. Moreover, the UE wakes up at the time on which the UE and the core network have agreed.

FIG. 6 is another update diagram of T3412 according to an embodiment of the present application. As shown in FIG. 6, if the end time of the coverage hole or the certain operation does not come when T3412 ends, then the UE extends the runtime of T3412 such that T3412 and the duration of the coverage hole or the certain operation end simultaneously. The runtime of T3412 is updated to a duration that covers the duration of the coverage hole or the certain operation. That is, the runtime of T3412 is updated to the sum of the original duration of the coverage hole or the certain operation and a non-overlap between T3412 and the duration of the coverage hole or the certain operation.

When the duration of the coverage hole or the certain operation does not overlap the runtime of T3412 and overlaps the runtime of T3324, the final sleep time (that is, the duration of the certain operation) of the UE is a union of the configured runtime of T3412 and the duration of the coverage hole or the certain operation and is composed of multiple discontinuous time periods. Among the discontinuous time periods, one time period is the configured runtime of T3412, and other time periods are the duration of one coverage hole or one certain operation. The UE updates the runtime of T3412 based on the final sleep time. That is, the sleep state of the UE or the runtime of the updated T3412 includes time period 1 and time period 2. Time period 1 is the runtime of T3412 determined by configuration parameters of the core network. Time period 2 is the duration of one coverage hole or one certain operation. One or more time periods 2 are available.

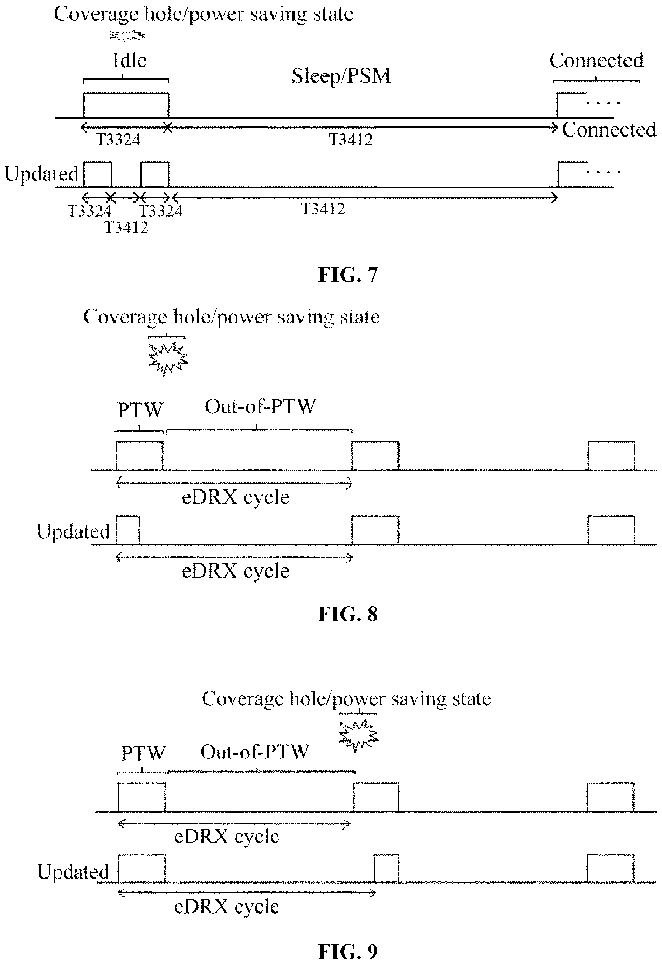

Alternatively, when the duration of the coverage hole or the certain operation does not overlap the runtime of T3412 and overlaps the runtime of T3324, the final non-sleep time (that is, the non-execution duration of the certain operation) is a complement of the configured runtime of T3324 and the duration of the coverage hole or the certain operation and is composed of multiple discontinuous time periods. FIG. 7 is an update diagram of T3324 according to an embodiment of the present application. As shown in FIG. 7, the UE updates the runtime of T3412 based on the final sleep time of the UE. That is, the non-sleep state of the UE or the runtime of the updated T3324 includes time period 1 and time period 2. Time period 1 is a duration from the start time of T3324 to the start time of the coverage hole or the certain operation. Time period 2 is a duration from the end time of the coverage hole or the certain operation to the start time of the next coverage hole or the certain operation or is a duration from the end time of the coverage hole or the certain operation to the configured end time of T3324.

Method two: The UE determines the final execution time information of the certain operation of the UE when the UE acquires the start time and the end time of the coverage hole or the certain operation and when the UE is configured with the eDRX mechanism.

When the duration of the coverage hole or the certain operation overlaps the out-of-PTW duration, the final sleep time (that is, the duration of the certain operation) of the UE is a union of the out-of-PTW runtime in the configured eDRX cycle and the duration of the coverage hole or the certain operation. The UE updates the out-of-PTW runtime based on the final sleep time of the UE. That is, the sleep state of the UE or the updated out-of-PTW start time is the minimum value of the start time of the coverage hole or the certain operation and the configured out-of-PTW start time, and the sleep state of the UE or the updated out-of-PTW end time is the maximum value of the end time of the coverage hole or the certain operation and the configured out-of-PTW end time.

Alternatively, when the duration of the coverage hole or the certain operation overlaps the out-of-PTW duration, the final non-sleep time (that is, the non-execution duration of the certain operation) of the UE is a difference set between the configured runtime of the PTW and the duration of the coverage hole or the certain operation. That is, the non-sleep state of the UE or the updated start time of the PTW is the maximum value of the start time of the coverage hole or the certain operation and the configured start time of the non-updated PTW, and the non-sleep state of the UE or the updated end time of the PTW is the minimum value of the end time of the coverage hole or the certain operation and the configured end time of the PTW.

Illustratively, if the out-of-PTW runtime in the eDRX cycle covers all of the duration of the coverage hole or the certain operation, the out-of-PTW duration and the duration of the PTW remain the same.

FIG. 8 is an update diagram of the out-of-PTW duration based on an embodiment of the present application. As shown in FIG. 8, if a UE determines that a coverage hole or a certain operation occurs in a PTW, the UE ends the PTW at the start time of the coverage hole and enters the PTW, that is, enters the eDRX inactive state.

FIG. 9 is another update diagram of the out-of-PTW duration based on an embodiment of the present application. As shown in FIG. 9, if a UE determines that a coverage hole occurs when the UE is in the eDRX inactive state and is about to enter a PTW, the UE delays starting the PTW.

When the duration of the coverage hole or the certain operation does not overlap the out-of-PTW duration and overlaps the duration of the PTW, the final sleep time (that is, the duration of the certain operation) of the UE is a union of the configured out-of-PTW duration and the duration of the coverage hole or the certain operation and is composed of multiple discontinuous time periods. Among the discontinuous time periods, one time period is the configured out-of-PTW duration, and other time periods are each the duration of one coverage hole or one certain operation. The UE updates the out-of-PTW runtime based on the final sleep time. That is, the sleep state of the UE or the updated out-of-PTW runtime includes time period 1 and time period 2. Time period 1 is the out-of-PTW runtime determined by configuration parameters of the core network. Time period 2 is the duration of one coverage hole or one certain operation. One or more time periods 2 are available.

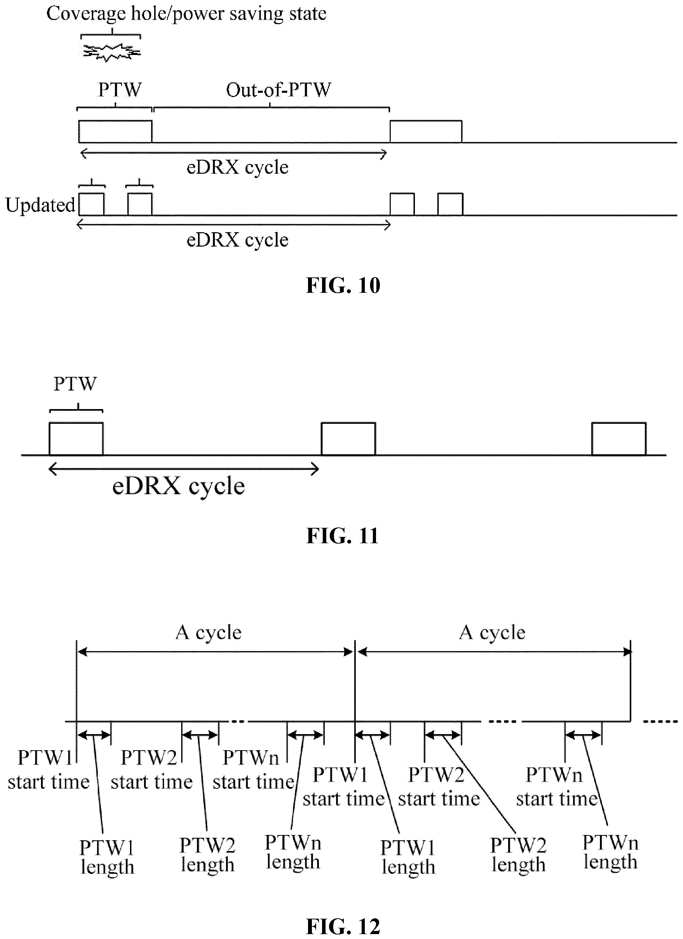

Alternatively, when the duration of the coverage hole or the certain operation does not overlap the out-of-PTW duration and overlaps the duration of the PTW, the final non-sleep time (that is, the non-execution duration of the certain operation) is a complement of the configured duration of the PTW and the duration of the coverage hole or the certain operation and is composed of multiple discontinuous time periods. FIG. 10 is an update diagram of the duration of a PTW according to an embodiment of the present application. As shown in FIG. 10, a UE updates the duration of the PTW based on the final sleep time of the UE. That is, the non-sleep state of the UE or the updated duration of the PTW includes time period 1 and time period 2. Time period 1 is a duration from the start time of the PTW to the start time of a coverage hole or a certain operation. Time period 2 is a duration from the end time of the coverage hole or the certain operation to the start time of the next coverage hole or the certain operation or is a duration from the end time of the coverage hole or the certain operation to the configured out-of-PTW end time.

In an embodiment, when the UE acquires the time information of the coverage hole, the UE may execute the certain operation during the runtime of the coverage hole. The time information of the coverage hole may be indicated by a base station or a core network.

Method one: A base station indicates the execution time information of the certain operation to the UE. In an embodiment, the base station may indicate a list of the execution time information of the certain operation to the UE through an RRC message or system information. The execution time information of the certain operation includes the start time, the duration, or the end time of the coverage hole or the certain operation. The RRC message may be, for example, an RRC connection setup (RRCConnectionSetup) message or an RRC connection reconfiguration (RRCConnectionReconfiguration) message. The certain operation may be associated with an area (for example, the coverage of a serving cell or the coverage of a serving satellite) where the UE is located. The certain operation may be applicable to a stationary UE. Moreover, the execution time information may be absolute time information.

Method two: The core network indicates the execution time information of the certain operation to the UE. In an embodiment, the core network may indicate a list of the execution time information of the certain operation to the UE through a NAS message. The execution time information of the certain operation includes the start time, the duration, or the end time of the coverage hole or the certain operation. The NAS message may be, for example, an ATTACH ACCEPT message or a TRACKING AREA UPDATE (TAU) ACCEPT message. The certain operation may be associated with an area (for example, the coverage of a serving cell or the coverage of a serving satellite) where the UE is located. The certain operation may be applicable to a stationary UE. Moreover, the execution time information may be absolute time information.

In an embodiment, if the core network and the base station can acquire the time information of the coverage hole, paging of the UE in the coverage hole can be avoided. Since the UE can move, the core network cannot know exactly the position of the UE in an idle state. To ensure that the core network can accurately know whether the paged UE is in the coverage hole, the message acquired by the message is similar to the message acquired by the UE. For example, the UE may acquire the execution time information of the certain operation by using the determination method of the execution time information in the previous embodiment. Accordingly, the core network acquires similar execution time information, for example, the time information of the coverage hole associated with the cell.

In an embodiment, the core network acquires the execution time information of the certain operation by using the following three methods: Method one: A base station sends the execution time information of the certain operation of a cell to the core network. In an embodiment, the base station sends a list of the execution time information of the certain operation to the core network through a message of an NG interface or a message of an S1 interface. The execution time information of the certain operation includes the start time and the end time of the coverage hole or the certain operation or includes the start time and the duration of the coverage hole or the certain operation. In an embodiment, the certain operation may be associated with the area covered by the cell, for example, the ID of the certain operation may be associated with the ID of the cell. In this manner, the core network can know the execution time information of the certain operation within the area covered by the cell. Alternatively, the base station may send the service start time and the service end time of the cell to the core network through the message of the NG interface or the message of the S1 interface or may associate IDs of two or more cells, for example, two cells. That the core network covers the two cells may be construed as that the core network covers the same area. When the core network covers the two cells, the execution time information of certain operations in the area covered by the associated cells may be obtained based on the service time of the two cells. The NG message or the S1 message may be, for example, an XN SETUP REQUEST message, a 5G NG RADIO ACCESS NETWORK NODE CONFIGURATION UPDATE message, a CELL ACTIVATION REQUEST message, or a RESOURCE STATUS REQUEST message.

Method two: A UE reports the execution time information of the certain operation acquired by the UE to a base station or the core network. In an embodiment, the UE acquires the execution time information of the certain operation by using the determination method of the execution time information in the previous embodiment. The execution time information includes the start time and the end time of the certain operation or includes the start time and the duration of the certain operation. When the core network or the base station indicates that the UE can report the execution time information of the certain operation, the UE may report the execution time information of the certain operation. The core network may indicate to the UE, through a NAS message (for example, an ATTACH ACCEPT message or a TAU ACCEPT message), that the UE can report the execution time information of the certain operation. The base station may indicate to the UE, through an RRC message (for example, an RRCConnectionReconfiguration message) or system information, that the UE can report the execution time information of the certain operation. Then the UE may report the execution time information of the certain operation to the base station through an RRC message. The RRC message may be, for example, an RRC Connection Request message, an RRCConnectionResumeRequest message, or an RRCEarlyDataRequest message. In an embodiment, the UE acquires the execution time information of the certain operation. The execution time information includes the start time and the end time of the certain operation or includes the start time and the duration of the certain operation. The UE may report the execution time information of the certain operation to the base station through an RRC message. The RRC message may be, for example, an RRC Connection Request message, an RRC Connection Setup Complete message, an RRC Connection Reconfiguration Complete message, or a UE Assistance Information message. The UE may report the execution time information of the certain operation to the core network through a NAS message. The NAS message may be, for example, a TAU Request message, a TAU Request Complete message, an ATTACH REQUEST message, or an ATTACH REQUEST COMPLETE message.

Method three: When the UE detects the coverage hole, the UE may report the execution time information of the certain operation acquired by the UE to the base station or the core network. If the UE finds that the UE is still in a coverage hole when the UE searches cells after the original coverage hole ends, the reason for this may be that the time information of the coverage hole configured by the core network or the base station is not the time information of the coverage hole associated with the area where the UE is located, or the UE moves out of the coverage hole configured by the core network or the base station. Alternatively, if the UE finds, according to PSM or eDRX parameters configured by the core network, that the UE is still in a coverage hole after the UE enters an inactive state or ends a sleep state, the reason for this may be that the sleep time of PSM or eDRX parameters configured by the core network does not cover all of the duration of the coverage hole associated with the area where the UE is located. In this case, the UE instructs the base station or the core network to adjust the time information of the coverage hole. If the UE finds that the time information of the coverage hole configured by the core network or the base station is inconsistent with reality or finds that the inactive time or the sleep time of PSM or eDRX parameters configured by the core network does not cover all of the duration of the coverage hole, the UE may report an indication that configuration of the execution time information of the certain operation is inconsistent. When the core network or the base station indicates that the UE can report the execution time information of the certain operation, the UE may report the indication that configuration of the execution time information of the certain operation is inconsistent.

In an embodiment, the indication that configuration of the execution time information of the certain operation is inconsistent means that the execution time information of the certain operation adjusted by the base station or the core network is inaccurate and needs to be adjusted or means that the inactive time or the sleep time of PSM or eDRX parameters configured by the core network is inaccurate and needs to be adjusted. In an embodiment, the UE may recommend the execution time information of the certain operation to the base station or the core network. The execution time information may be the time information of the coverage hole previously detected by the UE, may be the execution time information of the certain operation predicted by the UE (that is, the execution time information determined based on the history camping cell, the signal-receiving strength, and the priority in the previous embodiment), or may be the execution time information of the certain operation executed by the UE (that is, the execution time information determined by the UE based on parameters of the PSM mechanism or the eDRX mechanism in the previous embodiment).

When the core network or the base station indicates that the UE can report the execution time information of the certain operation, the UE may report the execution time information of the certain operation. The core network may indicate to the UE, through a NAS message (for example, an ATTACH ACCEPT message or a TAU ACCEPT message), that the UE can report the execution time information of the certain operation. The base station may indicate to the UE, through an RRC message (for example, an RRCConnectionReconfiguration message) or system information, that the UE can report the execution time information of the certain operation.

In an embodiment, the UE may report the execution time information of the certain operation to the base station through an RRC message. The RRC message may be, for example, an RRC Connection Request message, an RRC Connection Resume Request message, an RRC Early Data Request message, or a UE Assistance Information message. In an embodiment, the UE may report the execution time information of the certain operation to the base station through an RRC message. The RRC message may be, for example, an RRC Connection Request message, an RRC Connection Setup Complete message, or an RRC Connection Reconfiguration Complete message. The UE may report the execution time information of the certain operation to the core network through a NAS message. The NAS message may be, for example, a TAU Request Complete message, an ATTACH REQUEST message, or an ATTACH REQUEST COMPLETE message.

FIG. 11 is a parameter configuration diagram of an existing eDRX mechanism based on an embodiment. As shown in FIG. 11, the UE negotiates with the core network about the duration of the PTW and the duration of the eDRX cyle, and the ID of the UE determines the start time of the PTW (that is, different UE IDs determine different start time). The UE listens to the paging message based on the eDRX cycle only within the PTW. In a satellite scenario, especially a scenario where a coverage hole exists, since the coverage hole may occur irregularly, the duration of the coverage hole may overlap the duration of the PTW. If the duration of the coverage hole coincides with the duration of the PTW (for example, the duration of the coverage hole covers all of the duration of the PTW), the UE is in a power-saving state within the duration of the PTW, and the UE may miss an opportunity to listen to a paging message and choose to wait for the runtime of the next PTW.

To prevent the UE from losing a paging message, the PTW can be flexibly configured such that the duration of the PTW does not overlap the duration of the coverage hole. In view of this, the following four methods are proposed in this embodiment:
Method one: The UE negotiates with the core network about a discontinuous-listening cycle parameter, where one discontinuous-listening cycle contains multiple PTWs. In an embodiment, the UE negotiates with the core network about the discontinuous-listening cycle parameter through a NAS procedure (for example, an Attach procedure, a TAU procedure, or a Registration procedure). The discontinuous-listening cycle parameter includes the discontinuous-listening cycle length and a PTW parameter list. The PTW parameter list includes multiple PTW parameters. The number of PTW parameters included in the PTW parameter list may be the same as the number of PTWs. Each PTW parameter includes one PTW start time and one PTW duration or includes one PTW start time and one PTW end time. The PTW start time may be absolute time or an offset value, for example, an offset value relative to the start time of the previous PTW. The UE may listen to a paging message within a PTW. FIG. 12 is a parameter configuration diagram of an eDRX mechanism according to an embodiment of the present application. As shown in FIG. 12, each discontinuous-listening cycle includes n PTWs. In FIG. 12, PTWn Start Time indicates the start time (that is, the PTW start time) of the nth PTW, and PTWn Length indicates the duration (that is, the PTW duration) of the nth PTW.

In this manner, a non-continuous listening cycle corresponds to the revolution period of a satellite, and each PTW in a non-continuous listening cycle corresponds to a time window in which the UE is in a coverage hole. The core network sends a paging message to the UE within a PTW of a discontinuous-listening cycle; or the core network sends a discontinuous-listening cycle parameter to the base station through a paging message, and the base station sends the paging message to the UE within a PTW of a discontinuous-listening cycle.

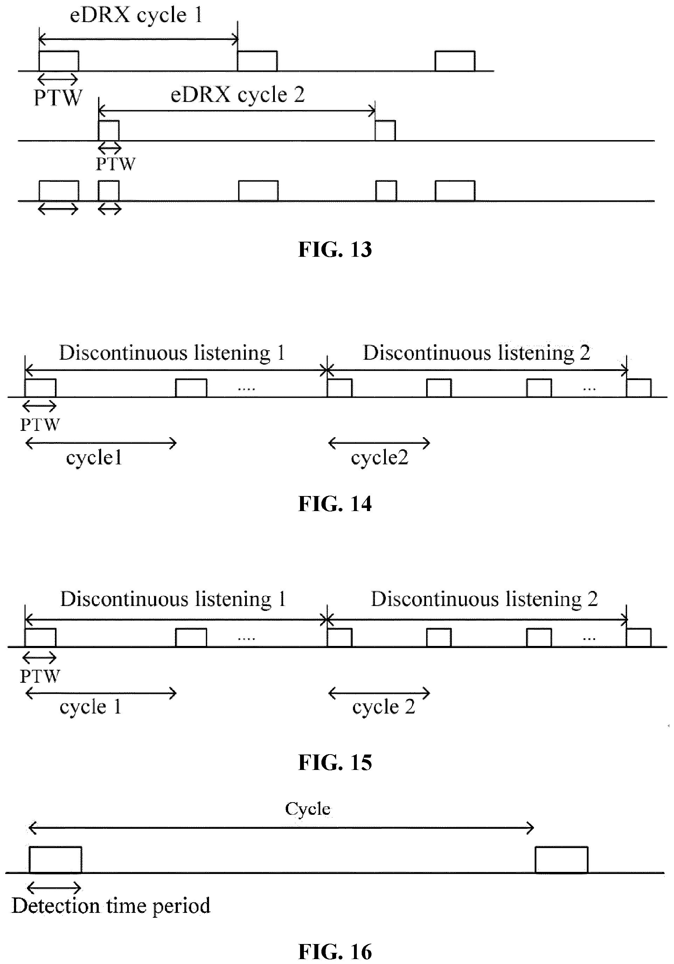

Method two: The UE negotiates with the core network about multiple discontinuous-listening cycle parameters and cyclically listens to a paging message based on each discontinuous-listening cycle parameter. Each discontinuous-listening cycle contains one PTW. In an embodiment, the UE negotiates with the core network about a discontinuous-listening cycle parameter list (that contains multiple discontinuous-listening cycle parameters) through a NAS procedure (for example, an Attach procedure or a TAU procedure). Each discontinuous-listening cycle parameter includes the discontinuous-listening cycle length and a PTW parameter. Each PTW parameter includes one PTW start time and one PTW duration or includes one PTW start time and one PTW end time. The UE calculates a union of PTW durations in multiple discontinuous-listening cycles, that is, listens to paging messages in all of the configured PTWs. FIG. 13 is a parameter configuration diagram of another eDRX mechanism according to an embodiment of the present application. As shown in FIG. 13, eDRX cycle1 indicates the first discontinuous-listening cycle, eDRX cycle2 indicates the second discontinuous-listening cycle, and each discontinuous-listening cycle contains one PTW. The UE calculates a union of the PTW duration in eDRX cycle1 and the PTW duration in eDRX cycle2 to obtain reconfigured PTWs.

In this manner, the length of each discontinuous-listening cycle corresponds to the duration of a different satellite, and the PTW in each discontinuous-listening cycle corresponds to a time window in which the UE is in a coverage hole. The core network sends a paging message to the UE within a PTW of a discontinuous-listening cycle; or the core network sends a discontinuous-listening cycle parameter to the base station through a paging message, and the base station sends the paging message to the UE within a PTW of a discontinuous-listening cycle.

Method three: The UE negotiates with the core network about multiple discontinuous-listening cycle parameters and cyclically listens to a paging message based on each discontinuous-listening cycle parameter. Each discontinuous-listening cycle includes one PTW. Each discontinuous-listening cycle corresponds to one time period (that is, the discontinuous-listening duration). In an embodiment, the UE negotiates with the core network about a discontinuous-listening cycle parameter list (that contains multiple discontinuous-listening cycle parameters) through a NAS procedure (for example, an Attach procedure, a TAU procedure, or a Registration procedure). Each discontinuous-listening cycle parameter includes the discontinuous-listening start time, the discontinuous-listening cycle length, and a PTW parameter. The discontinuous-listening cycle length (duration) may be obtained based on the difference between the discontinuous-listening start time and the next discontinuous-listening start time. Alternatively, each discontinuous-listening cycle parameter includes the discontinuous-listening start time offset value, the discontinuous-listening cycle length, and a PTW parameter. The discontinuous-listening cycle length (duration) may be obtained based on the next discontinuous-listening start time offset value. Alternatively, each discontinuous-listening cycle parameter includes the discontinuous-listening duration, the discontinuous-listening cycle length, and a PTW parameter. The discontinuous-listening cycle start time is equal to the sum of the previous discontinuous-listening cycle start time and the previous discontinuous-listening cycle length (duration). FIG. 14 is a parameter configuration diagram of another eDRX mechanism according to an embodiment of the present application. As shown in FIG. 14, a start time, a start time offset value, or a duration is configured for each of the two discontinuous listenings (discontinuous listening 1 and discontinuous listening 2), where each discontinuous-listening time period may contain one or more PTWs.

In this manner, each discontinuous-listening cycle corresponds to the duration of a different satellite, and the PTW in each discontinuous-listening cycle corresponds to a time window in which the UE is in a coverage hole. The core network sends a paging message to the UE within a PTW of a discontinuous-listening cycle; or the core network sends a discontinuous-listening cycle parameter to the base station through a paging message, and the base station sends the paging message to the UE within a PTW of a discontinuous-listening cycle.

Method four: The UE negotiates with the core network about multiple discontinuous-listening cycle parameters and cyclically listens to a paging message based on each discontinuous-listening cycle parameter. Each discontinuous-listening cycle includes one PTW. Each discontinuous-listening cycle parameter corresponds to one area (for example, satellite coverage or cell coverage). In an embodiment, the UE negotiates with the core network about a discontinuous-listening cycle parameter list (that contains multiple discontinuous-listening cycle parameters) through a NAS procedure (for example, an Attach procedure, a TAU procedure, or a Registration procedure). Each discontinuous-listening cycle parameter includes the discontinuous-listening cycle length and a PTW parameter. Each discontinuous-listening cycle parameter is associated with one area, for example, one cell ID, one satellite ID, or one base station ID. If the UE moves to the cell covered by a satellite, the UE listens to a paging message based on the discontinuous-listening cycle parameter corresponding to the cell. For example, discontinuous-listening cycle parameter 1 corresponds to cell 1, and discontinuous-listening cycle parameter 2 corresponds to cell 2. When the UE is in cell 1, the UE listens to a paging message based on discontinuous-listening cycle parameter 1. When the UE is in cell 2, the UE listens to a paging message based on discontinuous-listening cycle parameter 2. FIG. 15 is a parameter configuration diagram of another eDRX mechanism according to an embodiment of the present application. As shown in FIG. 15, a start time, a start time offset value, or a duration is configured for each of the two discontinuous listenings (discontinuous listening 1 and discontinuous listening 2), where each discontinuous-listening time period may contain one or more PTWs; and discontinuous-listening cycle parameter 1 corresponds to cell 1, and discontinuous-listening cycle parameter 2 corresponds to cell 2.

Each PTW parameter contains one PTW time period. The UE calculates a union of PTW time periods corresponding to multiple discontinuous-listening cycles, that is, listens to paging messages in all of the configured PTWs.

In an embodiment, if the UE enters a coverage hole but does not know the end time of the coverage hole, the UE keeps detecting until it finds a camping cell. However, the long-time detection of the UE incus a large power consumption. To prevent a long-time power consumption, the UE may be configured with a relaxed-measurement cycle or a spaced-detection cycle, and a detection time period is configured in each relaxed-measurement cycle or each spaced-detection cycle.

The UE in an idle state detects a coverage hole. For example, during a time period, the UE cannot detect any suitable cell for camping, cannot detect any cell selection state, or cannot find any cell on all supported frequency bands, and does not acquire the end time of the coverage hole. In this case, the UE may enable the relaxed measurement mechanism or the spaced detection mechanism.

The UE executes a cell search every interval during the relaxed measurement or the spaced detection. For example, the UE searches for a camping cell on all supported frequency bands continuously during the relaxed measurement or the spaced detection; or the UE searches for a camping cell on all supported frequency bands discontinuously and cyclically during the relaxed measurement or the spaced detection. Moreover, in the time interval between the two detection time periods, the UE in an idle state does not execute measurement, cell selection, or listening to a paging message. FIG. 16 is a configuration diagram of a relaxed-measurement period or a spaced-detection period according to an embodiment of the present application. As shown in FIG. 16, a detection time period is configured in each relaxed-measurement cycle or each spaced-detection cycle such that the UE executes a cell search in the detection time period and executes a certain operation outside the detection time period to save power consumption of the UE.

When the UE starts to execute the relaxed measurement or the spaced detection, the AS may notify the NAS that the UE may be in the state of, for example, coverage hole, relaxed measurement, spaced detection, or access forbidden.

When the UE finds a suitable cell and camps in this cell, the UE no longer executes the relaxed measurement mechanism or the spaced detection mechanism. The AS may notify the NAS that currently the UE may be in, for example, a satellite coverage state or an access admitted state.

The detection time period in the relaxed measurement cycle or the detection time period in the spaced detection cycle may be configured by the base station through system information or an RRC message.

In an embodiment, the UE may execute an operation such as cell measurement or cell reselection when the UE is in an inactive state. However, if the UE cannot find a suitable cell when the UE is in a coverage hole, then the UE is in any cell selection state, that is, the UE keeps attempting cell measurement and cell selection. However, this process is useless and power-consuming. Therefore, the UE in an inactive state enters an idle state if it detects a coverage hole. The UE in an idle state performs a power saving scheme.

Alternatively, if a coverage hole exists for a short time, the UE enters an idle state at the start time of the coverage hole and then re-establishes a connection after leaving the coverage hole. The repeated connection establishment is time-consuming. To avoid this problem, the UE may remain in an inactive state in the duration of the coverage hole.

In an embodiment, six methods for determining whether the UE has entered an idle state or remains in an inactive state are described hereinafter.

Method one: The UE in an inactive state switches from an inactive state to an idle state if the current time is equal to or close to the time the serving cell is about to end services or if the UE determines that the serving cell is about to stop or has stopped services. The UE in an inactive state enters an idle state if the UE acquires the time the serving cell is about to end services and if the current time is equal to or close to the time the serving cell is about to end services, for example, the current time ≥ (the time the serving cell is about to end services - a first preset threshold). The first preset threshold may be a positive value, a negative value, or 0. The first preset threshold may be broadcast by the base station or configured by the RRC.

Method two: The UE in an inactive state enters an idle state if the duration in which the UE is in any cell selection state, finds no cell, or finds no camping cell is longer than a preset duration. The base station may indicate, through system information or an RRC message, that the UE may enter an idle state when the UE is in a coverage hole or finds no cell, or the base station may indicate that the UE may be in a coverage hole of a cell. The UE in an inactive state enters an idle state if the duration in which the UE is in any cell selection state, finds no cell, or finds no camping cell is longer than the preset duration. The preset duration may be configured by the base station, may be determined by the UE, may be a fixed value, or may be 0.

Method three: The UE in an inactive state determines whether to remain in an inactive state based on the duration of a coverage hole or the duration of a certain operation. The UE learns that a coverage hole occurs and acquires the duration of the coverage hole or the certain operation. The UE executes the certain operation at the start time of the coverage hole or the certain operation if the duration of the coverage hole or the certain operation is longer than a second preset threshold. The UE may remain in an inactive state if the duration of the coverage hole or the certain operation is shorter than the second preset threshold. The second preset threshold is broadcast by the base station in system information or configured in an RRC message.

Method four: The UE in an inactive state determines whether to remain in an inactive state based on an indication of the base station. The base station broadcasts in system information or indicates in an RRC message whether the UE enters an idle state when a coverage hole occurs. The UE executes the certain operation at the start time of a coverage hole if the base station indicates that the UE enters an idle state when the UE is in the coverage hole. The UE may remain in an inactive state in the duration of a coverage hole if the base station indicates that the UE does not enter an idle state when the UE is in the coverage hole.

Method five: any combination of the previous method one, method two, method three, and method four. For example, the UE switches from an inactive state to an idle state if the duration of the coverage hole is longer than the second preset threshold and if the current time is equal to or close to the time the serving cell is about to end services. The UE switches from an inactive state to an idle state if the duration of the coverage hole is longer than the second preset threshold and if the duration in which the UE finds no cell is longer than the preset duration.

The UE enters an idle state if the base station indicates that the UE enters an idle state when the UE is in the coverage hole and if the current time is equal to or close to the time the serving cell is about to end services. The UE switches from an inactive state to an idle state if the base station indicates that the UE enters an idle state when the UE is in the coverage hole and if the duration in which the UE finds no cell is longer than the preset duration.

Method six: After the UE determines, based on any previous method, that the UE is about to switch from an inactive state to an idle state, the UE exits an inactive state, including releasing the UE context and releasing all resources. The RRC layer may indicate to the NAS the reason why the UE releases the context and all resources, for example, the UE enters the coverage hole or executes the certain operation, and may indicate the execution time information of the certain operation, for example, the duration of the certain operation.

In an embodiment, although the UE may remain in an inactive state in the duration of a coverage hole, the UE may stop cell search and relaxed measurement to save power. Meanwhile, the NAS does not know that the UE is in an inactive state considers that the UE remains in a connected state. If uplink data arrives, the NAS initiates an RRC resume procedure that causes the UE to enter a connected state.

To avoid this problem, the following methods may be used:
Method one: The RRC layer executes the operation of deactivating the AS, for example, cell selection or cell measurement at the start time of the coverage hole or a certain operation. The UE maintains the UE context and the UE configuration until the coverage hole or the certain operation ends. When the coverage hole or the certain operation ends, the RRC executes the operation of activating the AS, and the UE remains in an inactive state.

Method two: The UE in an inactive state notifies the NAS when executing a certain operation. In an embodiment, at the start time of the coverage hole or the certain operation, the RRC layer executes the operation of deactivating the AS and notifies the NAS that the RRC layer executes the operation of deactivating the AS, the RRC layer executes the certain operation, or the RRC layer enters the coverage hole; or notifies the duration of the certain operation, the coverage hole, or access forbidden. When the coverage hole ends, the RRC layer executes the operation of activating the AS and notifies the NAS that the RRC layer activates the AS, the RRC layer ends the certain operation, or the UE is about to leave the coverage hole.

Method three: The UE in an inactive state sends a failure indication to the NAS when executing a certain operation. The RRC layer sends the failure indication to the NAS when the NAS initiates an RRC resume procedure and when the UE in an inactive state executes the certain operation. The failure indication may carry the reason for the failure, may carry that the RRC layer executes the operation of deactivating the AS, may carry that the RRC layer executes the certain operation, may carry that the UE enters the coverage hole, or may carry the duration of the certain operation or the coverage hole.

In an embodiment, in a satellite scenario, a satellite is moving, for example, the satellite moves from the area where the UE is located to another area and no longer serves the area where the UE is located. In this case, signals received by the UE gradually deteriorate until the UE receives no signal from the satellite. If the UE attempts to resume a radio link according to an existing procedure when the satellite is about to stop serving the area where the UE is located and when the UE detects a physical-layer problem, the attempt is useless because signals from the satellite gradually deteriorate. In this case, the UE should attempt to establish an RRC connection in another cell as soon as possible and continue traffic transmission.

However, a hole may occur in the satellite coverage. The UE fails to trigger a radio link when the serving satellite is about to stop serving the area where the UE is located. A coverage hole may exist in this area for a period of time if during this period, a new satellite does not cover the area where the UE is located. After the UE fails to trigger a radio link, the UE attempts an RRC re-establishment procedure and executes cell selection. However, the UE finds no new cell, that is, the RRC re-establishment procedure fails, and the UE returns to an idle state. It can be seen that in this scenario, the UE fails in cell selection and RRC re-establishment. In this case, it is feasible that when the serving satellite is about to stop serving the area where the UE is located and when a coverage hole is about to occur in this area, the UE returns to an idle state and executes a power saving scheme until the coverage hole disappears.

Method one: The RRC layer exits a connected state and the UE in a connected state returns to an idle state when the UE determines that the UE is about to enter the coverage hole, for example the current time is equal to or greater than the time the serving cell is about to end services, or the UE determines that the serving cell is about to stop or has stopped services. The RRC layer indicates to the NAS the reason for the release, indicates that the UE enters the coverage hole or executes the certain operation, or indicates the execution time information of the certain operation or the coverage hole.

Method two: The RRC layer of the UE initiates an RRC release procedure, and the UE in a connected state switches from a connected state to an idle state when the UE determines that the UE is about to enter the coverage hole, for example the current time is equal to or greater than the time the serving cell is about to end services, or the UE determines that the serving cell is about to stop or has stopped services. The RRC layer indicates to the NAS the reason for the release, indicates that the UE enters the coverage hole or executes the certain operation, or indicates the execution time information of the certain operation or the coverage hole.

Method three: The UE in a connected state switches from a connected state to an idle state, the RRC layer deactivates the AS, and the AS does not execute cell selection or cell measurement when the UE determines that the UE is about to enter the coverage hole, for example the current time is equal to or greater than the time the serving cell is about to end services, or the UE determines that the serving cell is about to stop or has stopped services. In this case, the RRC layer notifies the NAS the reason why the RRC layer activates or deactivates the AS, for example, the UE enters the coverage hole or executes the certain operation, and notifies the NAS the duration of the coverage hole or the certain operation.

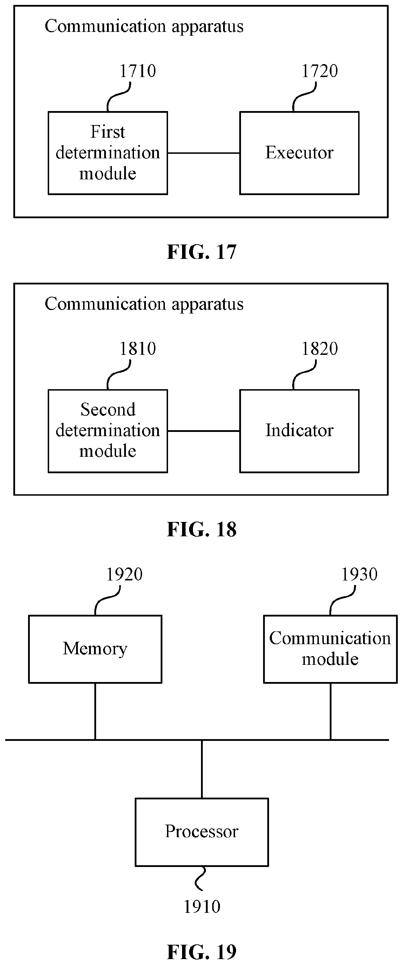

In an embodiment, FIG. 17 is a block diagram of a communication apparatus based on an embodiment of the present application. This embodiment is applied to a first communication node. As shown in FIG. 17, the communication apparatus of this embodiment includes a first determination module 1710 and an executor 1720.

The first determination module 1710 is configured to determine execution time information of a certain operation, where the certain operation is the operation of disabling a cell search.

The executor 1720 is configured to execute the certain operation based on the execution time information.

In an embodiment, the certain operation includes one of deactivating an access stratum (AS); stopping a measurement operation; stopping a cell selection or reselection operation; stopping a public land mobile network (PLMN) selection operation; stopping a radio resource control (RRC) procedure initiation operation; or stopping listening to a paging message.

In an embodiment, the execution time information includes at least one of the start time and the end time of the certain operation, the start time and the duration of the certain operation, or the time interval of the certain operation, where the left end point and the right end point of the time interval of the certain operation are the start time and the end time of the certain operation respectively.

In an embodiment, the first determination module 1710 is configured to perform at least one of determining the execution time information of the certain operation based on the time information of a coverage hole associated with a history camping cell; determining the execution time information of the certain operation based on the time information of coverage holes associated with at least two cells able to receive the strongest signals; or determining the execution time information of the certain operation based on the time information of coverage holes associated with at least two cells that rank highest in terms of cell reselection priority and signal-receiving strength.

In an embodiment, the first determination module 1710 is configured such that when an overlap exists among the time information of coverage holes associated with the at least two cells, the execution time information of the certain operation is determined based on the minimum value of the start time of the time information of coverage holes associated with all cells and the maximum value of the end time of the time information of coverage holes associated with all cells; or when no overlap exists among the time information of coverage holes associated with the at least two cells, a union of the time information of coverage holes associated with all cells is determined as the execution time information of the certain operation.

In an embodiment, the communication apparatus applied to the first communication node also includes a first reporting module configured such that the RRC layer of the first communication node reports the execution time information of the certain operation to the non-access stratum (NAS) of the first communication node, a second communication node, or a core network.

In an embodiment, the communication apparatus applied to the first communication node also includes a second reporting module configured to report a certain-operation start indication, a data transmission pause indication, or an access forbidden indication to the NAS of the first communication node when the RRC layer of the first communication node detects that the first communication node is about to enter or has entered a coverage hole; or report a certain-operation end indication, a data transmission resume indication, or an access admitted indication to the NAS of the first communication node when the RRC layer of the first communication node detects that the first communication node is about to leave or has left a coverage hole.

In an embodiment, the first determination module 1710 is configured to determine the execution time information of the certain operation based on the power saving time information of the Power Saving Mode (PSM) mechanism or the power saving time information of the Extended Discontinuous Reception (eDRX) mechanism and the time information of a coverage hole.

In an embodiment, when the first communication node is configured with the PSM mechanism, the first determination module 1710 is configured to perform at least one of the following: when an overlap exists between the duration of the coverage hole and the duration in which the PSM mechanism is in a sleep state, determining a union of the duration of the coverage hole and the duration in which the PSM mechanism is in the sleep state to be the duration of the certain operation; or when an overlap exists between the duration of the coverage hole and the duration of an idle state, determining a union of the duration of the coverage hole and the duration in which the PSM mechanism is in a sleep state to be the duration of the certain operation, where the duration of the certain operation includes at least two discontinuous time periods.

In an embodiment, when the first communication node is configured with the eDRX mechanism, the first determination module 1710 is configured to perform at least one of the following: when an overlap exists between the duration of the coverage hole and the out-of-paging-transmission-window (PTW) duration, determining a union of the out-of-PTW duration and the duration of the coverage hole to be the duration of the certain operation; or when an overlap exists between the duration of the coverage hole and the duration of a PTW, determining a union of the out-of-PTW duration and the duration of the coverage hole to be the duration of the certain operation, where the duration of the certain operation includes at least two discontinuous time periods.

In an embodiment, the communication apparatus applied to the first communication node also includes a receiver configured to receive an RRC message or system information carrying the execution time information indicated by a second communication node; or receive a NAS message carrying the execution time information indicated by a core network.

In an embodiment, the communication apparatus applied to the first communication node also includes a third reporting module configured to report the execution time information of the certain operation to a second communication node or a core network; or report the execution time information of the certain operation acquired by the first communication node to a second communication node or a core network.

In an embodiment, the communication apparatus applied to the first communication node also includes a third determination module configured to determine a discontinuous-listening cycle parameter. The discontinuous-listening cycle parameter includes at least one of the discontinuous-listening start time, the discontinuous-listening start time offset value, the discontinuous-listening duration, the discontinuous-listening cycle length, or the PTW parameter. Each PTW parameter includes at least one of the PTW start time and the PTW duration; or the PTW start time and the PTW end time.

In an embodiment, the third determination module is configured to perform at least one of the following: negotiating with a core network about the discontinuous-listening cycle parameter, where a cycle corresponding to the discontinuous-listening cycle parameter contains at least two PTWs; negotiating with a core network about at least two discontinuous-listening cycle parameters and listening cyclically based on a cycle corresponding to each discontinuous-listening cycle parameter, where each discontinuous-listening cycle contains one PTW; negotiating with a core network about at least two discontinuous-listening cycle parameters and listening cyclically based on a cycle corresponding to each discontinuous-listening cycle parameter, where each discontinuous-listening cycle contains one PTW, and each discontinuous listening corresponds to one time period; or negotiating with a core network about at least two discontinuous-listening cycle parameters and listening cyclically based on a cycle corresponding to each discontinuous-listening cycle parameter, where each discontinuous-listening cycle contains one PTW, and each discontinuous-listening cycle parameter is associated with one area.

In an embodiment, the communication apparatus applied to the first communication node also includes a configuration module configured to configure a relaxed-measurement cycle or a spaced-detection cycle and configure a detection time period in each relaxed-measurement cycle or each spaced-detection cycle, where the detection time period is a time period in which the first communication node performs the cell search.

In an embodiment, the communication apparatus applied to the first communication node also includes a switching module configured to switch the current state of the first communication node based on the execution time information of the certain operation.

In an embodiment, when the first communication node is in an inactive state, the switching module is configured to perform at least one of the following: when the current time is greater than or equal to the difference between the start time of the certain operation and a first preset threshold, switching the inactive state of the first communication node to the idle state of the first communication node; when the first communication node is in a cell selection state or when the duration of the cell search reaches a preset duration, switching the inactive state of the first communication node to the idle state of the first communication node; when the duration in which the first communication node executes the certain operation reaches a second preset threshold, switching the inactive state of the first communication node to the idle state of the first communication node; or instructing the first communication node to switch from an inactive state to an idle state based on configuration information of a second communication node in system information or an RRC message.

In an embodiment, when the first communication node is in an inactive state, the communication apparatus applied to the first communication node also includes a deactivation module configured such that at least one of the following operations is performed: At the start time of the certain operation, the RRC layer of the first communication node executes the operation of deactivating an AS; at the start time of the certain operation, the NAS of the first communication node instructs the RRC layer of the first communication node to execute the operation of deactivating an AS; or at the start time of the certain operation, the RRC layer of the first communication node executes the reply operation of a NAS failure.

In an embodiment, when the first communication node is in a connected state, the switching module is configured such that at least one of the following operations is performed: When the current time is greater than or equal to the start time of the certain operation, the RRC layer of the first communication node executes the operation of exiting the connected state, and the first communication node returns to an idle state; when the current time is greater than or equal to the start time of the certain operation, the RRC layer of the first communication node initiates an RRC release procedure, the RRC layer of the first communication node executes the operation of exiting the connected state, and the first communication node returns to an idle state; or when the current time is greater than or equal to the start time of the certain operation, the RRC layer of the first communication node executes the operation of exiting the connected state, the first communication node returns to an idle state, and the RRC layer of the first communication node executes the certain operation.

The communication apparatus of this embodiment is configured to implement the communication method applied to the first communication node shown in FIG. 3. The communication apparatus of this embodiment has similar implementation principles and effects. The details are not repeated here.

In an embodiment, FIG. 18 is a block diagram of another communication apparatus based on an embodiment of the present application. This embodiment is applied to a second communication node. As shown in FIG. 18, the communication apparatus of this embodiment includes a second determination module 1810 and an indicator 1820.

The second determination module 1810 is configured to determine execution time information of a certain operation, where the certain operation is the operation of disabling a cell search. The indicator 1820 is configured to send the execution time information to a first communication node.

In an embodiment, the indicator 1820 is configured to send the execution time information to the first communication node through system information or an RRC message.

In an embodiment, the communication apparatus applied to the second communication node also includes a fourth reporting module configured to report the execution time information to a core network through a message of an NG interface or a message of an S1 interface.

The communication apparatus of this embodiment is configured to implement the communication method applied to the second communication node shown in FIG. 4. The communication apparatus of this embodiment has similar implementation principles and effects. The details are not repeated here.

FIG. 19 is a diagram illustrating the structure of a communication device based on an embodiment of the present application. As shown in FIG. 19, the device of the present application includes a processor 1910, a memory 1920, and a communication module 1930. One or more processors 1910 may be configured in the device. FIG. 19 uses one processor 1910 as an example. One or more memories 1920 may be configured in the device. FIG. 19 uses one memory 1920 as an example. The processor 1910, memory 1920, and communication module 1930 of the device may be connected by a bus or connected in other manners. FIG. 19 uses connection by a bus as an example. In this embodiment, the device may be a terminal (for example, a user equipment).

As a computer-readable storage medium, the memory 1920 may be configured to store software programs and computer-executable programs and modules such as program instructions/modules (for example, the first determination module 1710 and the executor 1720 of the communication apparatus) corresponding to the device of any embodiment of the present application. The memory 1920 may include a program storage region and a data storage region. The program storage region may store an operating system and an application program required by at least one function. The data storage region may store data created based on the use of the device. Additionally, the memory 1920 may include a high-speed random access memory and a nonvolatile memory, such as at least one disk memory, a flash memory or other nonvolatile solid-state memories. In some examples, the memory 1920 may be remote from the processor 1910 and connected to the device by a network. Examples of the preceding network include, but are not limited to, the Internet, an intranet, a local area network, a mobile communication network, and a combination thereof.

The communication module 1930 is configured to perform communication interaction between a first communication node, a second communication node, and a core network.

When the communication device is the first communication node, the device may be configured to perform the communication method applied to the first communication node based on any previous embodiment and has corresponding functions and effects.

When the communication device is the second communication node, the device may be configured to perform the communication method applied to the second communication node based on any previous embodiment and has corresponding functions and effects.

An embodiment of the present application provides a storage medium. The storage medium stores computer-executable instructions which, when executed by a computer processor, cause the processor to perform a communication method applied to a first communication node. The method includes determining execution time information of a certain operation, where the certain operation is the operation of disabling a cell search; and executing the certain operation based on the execution time information.

An embodiment of the present application provides a storage medium. The storage medium stores computer-executable instructions which, when executed by a computer processor, cause the processor to perform a communication method applied to a second communication node. The method includes determining execution time information of a certain operation, where the certain operation is the operation of disabling a cell search; and sending the execution time information to a first communication node.

The term user equipment encompasses any suitable type of wireless user equipment, such as a mobile phone, a portable data processing apparatus, a portable web browser or an onboard mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor or another computing apparatus.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcode, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). The computer-readable media may include non-transitory storage media. The data processor may be of any type suitable for a local technical environment such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A communication method, applied to a first communication node, comprising:
determining execution time information of a certain operation, wherein the certain operation is an operation of disabling a cell search; and
executing the certain operation based on the execution time information.

2. The method of claim 1, wherein the certain operation comprises one of deactivating an access stratum, AS; stopping a measurement operation; stopping a cell selection or reselection operation; stopping a public land mobile network, PLMN, selection operation; stopping a radio resource control, RRC, procedure initiation operation; or stopping listening to a paging message.

3. The method of claim 1 or 2, wherein the execution time information comprises at least one of:
a start time of the certain operation and an end time of the certain operation, a start time of the certain operation and a duration of the certain operation, or a time interval of the certain operation, wherein a left end point of the time interval and a right end point of the time interval of the certain operation are a start time of the certain operation and an end time of the certain operation respectively.

4. The method of claim 1, 2, or 3, wherein determining the execution time information of the certain operation comprises at least one of:
determining the execution time information of the certain operation based on time information of a coverage hole associated with a history camping cell;
determining the execution time information of the certain operation based on time information of coverage holes associated with at least two cells with strongest signal-receiving strength; or
determining the execution time information of the certain operation based on time information of coverage holes associated with at least two cells that are top ranked in terms of cell reselection priority and signal-receiving strength.

5. The method of claim 4, wherein in a case where an overlap exists among the time information of the coverage holes associated with the at least two cells, the execution time information of the certain operation is determined based on a minimum value of start time of time information of coverage holes associated with the at least two cells and a maximum value of end time of the time information of the coverage holes associated with the at least two cells; or
in a case where no overlap exists among the time information of the coverage holes associated with the at least two cells, a union of time information of coverage holes associated with the at least two cells is determined as the execution time information of the certain operation.

6. The method of claim 1, further comprising:
reporting, through an RRC layer of the first communication node, the execution time information of the certain operation to a non-access stratum, NAS, of the first communication node, a second communication node, or a core network.

7. The method of claim 1, further comprising:
reporting a certain-operation start indication, a data transmission pause indication, or an access forbidden indication to a NAS of the first communication node in a case where an RRC layer of the first communication node detects that the first communication node is about to enter or has entered a coverage hole; or
reporting a certain-operation end indication, a data transmission resume indication, or an access admitted indication to a NAS of the first communication node in a case where an RRC layer of the first communication node detects that the first communication node is about to leave or has left a coverage hole.

8. The method of claim 1, 2, or 3, wherein determining the execution time information of the certain operation comprises:
determining the execution time information of the certain operation based on time information of a coverage hole and one of power saving time information of a Power Saving Mode, PSM, mechanism or power saving time information of an Extended Discontinuous Reception, eDRX, mechanism.

9. The method of claim 8, wherein in a case where the first communication node is configured with the PSM mechanism, determining the execution time information of the certain operation based on the power saving time information of the PSM mechanism and the time information of the coverage hole comprises one of:
in a case where an overlap exists between a duration of the coverage hole and a duration in which the PSM mechanism is in a sleep state, determining a union of the duration of the coverage hole and the duration in which the PSM mechanism is in the sleep state to be a duration of the certain operation; or
in a case where an overlap exists between a duration of the coverage hole and a duration of an idle state, determining a union of the duration of the coverage hole and the duration in which the PSM mechanism is in the sleep state to be a duration of the certain operation, wherein the duration of the certain operation comprises at least two discontinuous time periods.

10. The method of claim 8, wherein in a case where the first communication node is configured with the eDRX mechanism, determining the execution time information of the certain operation based on the power saving time information of the eDRX mechanism and the time information of the coverage hole comprises one of:
in a case where an overlap exists between a duration of the coverage hole and an out-of-paging-transmission-window, PTW, duration, determining a union of the out-of-PTW duration and the duration of the coverage hole to be a duration of the certain operation; or
in a case where an overlap exists between a duration of the coverage hole and a duration of a PTW, determining a union of an out-of-PTW duration and the duration of the coverage hole to be a duration of the certain operation, wherein the duration of the certain operation comprises at least two discontinuous time periods.

11. The method of claim 1, further comprising:
receiving an RRC message carrying the execution time information or system information carrying the execution time information indicated by a second communication node; or
receiving a NAS message carrying the execution time information indicated by a core network.

12. The method of claim 1, further comprising:
reporting the execution time information of the certain operation to a second communication node or a core network; or
reporting the execution time information of the certain operation acquired by the first communication node to a second communication node or a core network.

13. The method of claim 1, further comprising:
determining a discontinuous-listening cycle parameter, wherein the discontinuous-listening cycle parameter comprises at least one of a discontinuous-listening start time, a discontinuous-listening start time offset value, a discontinuous-listening duration, a length of a discontinuous-listening cycle, or PTW parameters, wherein
each PTW parameter of the PTW parameters comprises at least one of:
a PTW start time and a PTW duration; or
a PTW start time and a PTW end time.

14. The method of claim 13, wherein determining the discontinuous-listening cycle parameter comprises at least one of:
negotiating with a core network about the discontinuous-listening cycle parameter, wherein a cycle corresponding to the discontinuous-listening cycle parameter contains at least two PTWs;
negotiating with a core network about at least two discontinuous-listening cycle parameters and listening cyclically based on a cycle corresponding to each discontinuous-listening cycle parameter of the at least two discontinuous-listening cycle parameters, wherein each discontinuous-listening cycle contains one PTW;
negotiating with a core network about at least two discontinuous-listening cycle parameters and listening cyclically based on a cycle corresponding to each discontinuous-listening cycle parameter of the at least two discontinuous-listening cycle parameters, wherein each discontinuous-listening cycle contains one PTW, and each discontinuous listening cycle corresponds to one time period; or
negotiating with a core network about at least two discontinuous-listening cycle parameters and listening cyclically based on a cycle corresponding to each discontinuous-listening cycle parameter of the at least two discontinuous-listening cycle parameters, wherein each discontinuous-listening cycle contains one PTW, and each discontinuous-listening cycle parameter is associated with one area.

15. The method of claim 1, further comprising:
configuring a relaxed-measurement cycle or a spaced-detection cycle and configuring a detection time period in each relaxed-measurement cycle or each spaced-detection cycle, wherein the detection time period is a time period in which the first communication node performs the cell search.

16. The method of claim 1, further comprising:
switching a current state of the first communication node based on the execution time information of the certain operation.

17. The method of claim 16, wherein in a case where the first communication node is in an inactive state, switching the current state of the first communication node based on the execution time information of the certain operation comprises at least one of:
in a case where a current time is greater than or equal to a difference between a start time of the certain operation and a first preset threshold, switching the inactive state of the first communication node to an idle state of the first communication node;
in a case where the first communication node is in a cell selection state or in a case where a duration of the cell search reaches a preset duration, switching the inactive state of the first communication node to an idle state of the first communication node;
in a case where a duration in which the first communication node executes the certain operation reaches a second preset threshold, switching the inactive state of the first communication node to an idle state of the first communication node; or
instructing the first communication node to switch from the inactive state to an idle state based on configuration information of a second communication node in system information or an RRC message.

18. The method of claim 16, wherein in a case where the first communication node is in a connected state, switching the current state of the first communication node based on the execution time information of the certain operation comprises at least one of:
in a case where a current time is greater than or equal to a start time of the certain operation, executing, by an RRC layer of the first communication node, an operation of exiting the connected state and returning to an idle state;
in a case where a current time is greater than or equal to a start time of the certain operation, initiating, by an RRC layer of the first communication node, an RRC release procedure, executing, by the RRC layer of the first communication node, an operation of exiting the connected state, and returning to an idle state; or
in a case where a current time is greater than or equal to a start time of the certain operation, executing, by an RRC layer of the first communication node, an operation of exiting the connected state, returning to an idle state, and executing, by the RRC layer of the first communication node, the certain operation.

19. The method of claim 1, in a case where the first communication node is in an inactive state, further comprising at least one of:
at a start time of the certain operation, executing, by an RRC layer of the first communication node, an operation of deactivating an AS;
at a start time of the certain operation, instructing, by a NAS of the first communication node, an RRC layer of the first communication node to execute an operation of deactivating an AS; or
at a start time of the certain operation, executing, by an RRC layer of the first communication node, a reply operation of a NAS failure.

20. A communication method, the method being applied to a second communication node and comprising:
determining execution time information of a certain operation, wherein the certain operation is an operation of disabling a cell search; and
sending the execution time information to a first communication node.

21. The method of claim 20, wherein sending the execution time information to the first communication node comprises:
sending the execution time information to the first communication node through system information or an RRC message.

22. The method of claim 20, further comprising:
reporting the execution time information to a core network through a message of an NG interface or a message of an S1 interface.

23. A communication device, comprising a communication module, a memory, and at least one processor, wherein
the communication module is configured to perform communication interaction between a first communication node, a second communication node, and a core network;
the memory is configured to store at least one program; and
the at least one processor is configured to perform the method of any one of claims 1 to 19 or the method of any one of claims 20 to 22 when executing the at least one program.

24. A storage medium storing a computer program which, when executed by a processor, causes the processor to perform the method of any one of claims 1 to 19 or the method of any one of claims 20 to 22.
